# EUROPEAN PATENT APPLICATION

(11) **EP 1 768 249 A2**
(43) Date of publication of application: **28.03.2007**
(21) Application number: 07000266.2
(22) Date of filing: 06.12.2005
(51) Int. Cl.: H02P 5/52

(54) **Rotary electrical machine**

(30) Priority: 09.12.2004 JP 2004357339; 28.04.2005 JP 2005133559
(62) Divisional of application: 05026632.9
(71) Applicant: YAMAHA HATSUDOKI KABUSHIKI KAISHA, Iwata-shi, Shizuoka-ken 438-8501 (JP)
(72) Inventor: Hino, Haruyoshi, Iwata-shi Shizuoka-ken (JP); Murota, Keiko, Iwata-shi Shizuoka-ken (JP)
(74) Representative: Grünecker, Kinkeldey, Stockmair & Schwanhäusser Anwaltssozietät

(57) **Abstract**

The present invention relates to a rotary electrical machine comprising a rotary electrical machine comprising a rotor, being rotatable about an axis of a rotating shaft, and a stator, opposing the rotor, wherein the stator is divided into at least first and second stator cores along a direction in which the rotor and stator oppose to each other, said first stator core having a plurality of first teeth, respective one end surfaces of which oppose to the rotor, and a winding wound around a circumferential side surface of each one of the first teeth, and said second stator core having a plurality of second teeth, respective one end portions of which are positioned to oppose to respective opposite end surfaces that oppositely exist relative to the one end surfaces of the first teeth that oppose to the rotor, wherein one of said first and second stator cores is rotatable relative to the respective other one of these first and second stator cores, wherein, by relative rotation of said first or second stator cores about the axis of the rotating shaft, a gap to form a magnetic reluctance between the first and second stator cores is variable, and wherein each one of the first teeth has a protruding portion abutting on a side surface of each one of the second teeth at one of the end surfaces that opposes to the one end portion of each one of the second teeth.

## Description

The present invention relates to a small rotary electrical machine in which a current flowing through a coil is not used for a field magnet weakening control so that an extensive operation range covering a high torque low speed rotation through a low torque high speed rotation is provided, and a control thereof is easily done with high efficiency.

Conventionally, radial gap type electric motors that are used as a radial gap type rotary electrical machine, as a drive source for electromotive two-wheeled vehicles or the like, and other general electric motors, have a structure in which a yoke of a rotor (rotor side yoke) having a rotating shaft supported by its bearings and a yoke of a stator (stator side yoke) oppose to each other, and their opposing surfaces extend parallel to an axis of the rotating shaft.

The opposing surface of the rotor side yoke has a plurality of field magnets circumferentially disposed on a cylindrical inner wall, while the opposing surface of the stator side yoke has a plurality of teeth radially disposed to oppose to the cylindrical opposing surface of the rotor side yoke. A coil is wound around each one of the plurality of teeth.

That is, in the radial gap type electric motor, the opposing surfaces of the field magnets and the teeth extend parallel to the axis of the rotating shaft, and a gap between the opposing surfaces are formed to be cylindrical along the rotating shaft. That is, as called the radial gap type, the gap is formed to extend radially from the rotating shaft.

Also, to the contrary, although being a kind of the radial gap type electric motor, there is another electric motor that has a configuration in which the stator side yoke is cylindrically formed, and the rotor side yoke is columnar to be positioned within the cylinder. As one of this type of electric motors, an electric motor is proposed so that a cylindrical member in which a permeable section and an impermeable section are alternately positioned is laid between opposing surfaces of ends of respective projections of a stator core of the stator core side yoke and opposing surfaces of respective permanent magnets of the rotor side yoke to prevent cogging from occurring and also to bring in a low torque operation in a high speed rotation. (For example, see JP-A-2000-261988)

Also, similarly, as one of the type of electric motors in which the stator side yoke is cylindrically formed and the rotor side yoke is columnar to be positioned within the cylinder, in order to reduce the stator flux linkage in the high speed rotation, another electric motor is proposed such that the stator core of the stator side yoke is constructed with a cylindrical core and a bar-like core reciprocating within the cylindrically shaped core, and the bar-like shaped core moves in a radial direction of the stator side coil relative to a coil that is circumferentially wound around the cylindrically shaped core. (For example, see JP-A-2004-166369)

In other words, as one of the type of electric motors in which the stator side yoke is cylindrically formed and the rotor side yoke is columnar to be positioned within the cylinder, in order to reduce the stator flux linkage in the high speed rotation, another electric motor is proposed, in which the stator core of the stator side yoke is moved in a radial direction of the stator side coil relative to a coil that is circumferentially wound around the stator core. (For example, see JP-A-2004-166369)

On the other hand, recently, in addition to the radial gap type rotary electrical machines, axial gap type rotary electrical machines attract a great deal of attention.

For example, an axial gap type electric motor, as one of the axial gap type rotary electrical machines, has a disk-like rotor side yoke including a rotational shaft supported by its bearings and a disk-like stator side yoke which center is consistent with an axis of a rotational shaft of the rotor side yoke disposed to oppose to each other.

On an opposing surface of the rotor side yoke, a plurality of field magnets are circularly (or annulaly) disposed along a disk-like circumferential portion thereof, while, on an opposing surface of the stator side yoke, a plurality of teeth is disposed along a disk-like circumferential portion thereof. Also, the gap is made between opposing surfaces of the field magnets and of the teeth and the opposing surfaces define a surface that crosses the rotational shaft at right angles (i.e., perpendicularly crosses the rotational shaft). That is, as called the axial gap type, the gap is formed to extend in a direction along the rotational shaft, i.e., axially.

In the axial gap type electric motor as thus described, as one of methods to vary an output characteristic thereof, a method is known in which either a rotor (the rotor side yoke having field magnets) or a stator disposed to oppose to the rotor (a coiled core positioned on the stator side yoke) is movable in a direction of the rotational shaft to control a distance between the rotor and the stator; thereby, an amount of magnetic flux flowing between the field magnets and the coiled core is controlled to increase or decrease.

However, any one of the structures of the conventional art described above is a structure in which a configuration of the whole device can be large to increase mechanical loss. In other words, the radial gap type motor is required to be slimmer as possible, while the axial gap type motor is required to be thinner as possible; however, both of the requirements cannot be satisfied. Also, no remarkable improvements are given to a point that electric power is wasted without contributing to increasing torque.

Additionally, to make the output characteristics largely variably in a system in which the output characteristics are varied by changing the distance between the rotor and stator as described above, it is necessary to provide a large space so that the distance between the rotor and the stator can be changed largely. Then, the size of the electric motor is unavoidably increased. In addition, since the rotating shaft has to be long, there is a high possibility that failures such as an increase of mechanical loss caused by deformation of the rotating shaft may occur.

In view of the circumstances, a subject of the present invention is to provide a rotary electrical machine in which a stator disposed to oppose to a rotor is divided into at least two portions, one is fixed, and another one is movable in a rotational direction of the rotor relative to the fixed one portion to greatly change flow of flux flow, i.e., a base portion of the stator is rotational (movable) to control the field.

It is the objective of the present invention to provide a durable and small rotary electrical machine provided with a mechanism for varying the output characteristics thereof which does not increase the size of the entire rotary electrical machine to increase mechanical loss and does not consume electricity which does not contribute to torque.

This objective is solved by a rotary electrical machine comprising a rotary electrical machine comprising a rotor, being rotatable about an axis of a rotating shaft, and a stator, opposing the rotor, wherein the stator is divided into at least first and second stator cores along a direction in which the rotor and stator oppose to each other, said first stator core having a plurality of first teeth, respective one end surfaces of which oppose to the rotor, and a winding wound around a circumferential side surface of each one of the first teeth, and said second stator core having a plurality of second teeth, respective one end portions of which are positioned to oppose to respective opposite end surfaces that oppositely exist relative to the one end surfaces of the first teeth that oppose to the rotor, wherein one of said first and second stator cores is rotatable relative to the respective other one of these first and second stator cores, wherein, by relative rotation of said first or second stator cores about the axis of the rotating shaft, a gap to form a magnetic reluctance between the first and second stator cores is variable, and wherein each one of the first teeth has a protruding portion abutting on a side surface of each one of the second teeth at one of the end surfaces that opposes to the one end portion of each one of the second teeth.

Preferably, the movement of the stator core relative to the another stator core is a reciprocal movement within a predetermined angle in a rotational direction or reverse rotational direction of the rotor.

Further, preferably, a rotational angle of the one stator core relative to the another stator core is less than an angle of nip that is defined by two neighboring teeth of the second teeth.

Still further, preferably, the rotor comprises an annular section rotational about the axis of the rotating shaft; the first stator core comprises the plurality of first teeth each of which has a portion one end surface of which is positioned to oppose to the annular section and the winding is wound around the circumferential side surface of the portion except for both end surfaces; and the second stator core comprises the plurality of second teeth respective one end portions of which are positioned to oppose to respective other end surfaces of the first teeth of the first stator core that oppositely exist relative to the one end surfaces that oppose to the rotor, wherein the second stator core is movable in a rotational direction or a reverse rotational direction of the rotor.

Still further, preferably, the second stator core is movable in the rotational direction or the reverse rotational direction of the rotor and also movable in an axial direction of the rotor.

Still further, preferably, a lower portion of each one of the first teeth opposing to the annular section of the rotor is divided into a portion which has a winding on a circumferential surface thereof and another one portion which has no winding on a circumferential surface thereof, and the second teeth include teeth corresponding to the portion of the first teeth that has the winding on the circumferential surface thereof and other teeth corresponding to the another one portion of the first teeth that has no winding on the circumferential surface thereof.

Still further, preferably, respective opposing surfaces of the rotor and the first teeth are formed to obliquely extend in such a manner that an inner side of the opposing surface of the rotor that is positioned closer to the axis of a rotating shaft is thick and an outer side is thin.

The description still further discloses that the rotary electrical machine may further comprise a cylindrical rotor rotational about the axis of the rotating shaft, the first stator core having the plurality of first teeth one end surfaces of which are positioned inside of the cylindrical configuration of the cylindrical rotor to oppose to the rotor and the winding is wound around a circumferential side surface of each one of the first teeth except for both end surfaces, and the second stator core having a plurality of second teeth respective one end portions of which are positioned to oppose to respective other end surfaces of the first teeth of the first stator core that oppositely exist relative to the one end surfaces that oppose to the rotor, wherein the second stator core is movable in a rotational direction or a reverse rotational direction of the rotor.

The description still further discloses that the rotary electrical machine may further comprise a columnar of cylindrical rotor rotational about the axis of a rotating shaft, the first stator core having the plurality of first teeth one end surfaces of which are positioned outside in a radial direction of the rotor to oppose to the rotor and the winding is wound around a circumferential side surface of each one of the first teeth except for both end surfaces, and the second stator core having the plurality of second teeth respective one end portions of which are positioned to oppose to respective other end surfaces of the first teeth of the first stator core that oppositely exist relative to the one end surfaces that oppose to the rotor, and respective other end portions are retained by a retainer, wherein the second stator core is movable in a rotational direction or a reverse rotational direction of the rotor.

Still further, preferably, when the second teeth are positioned to entirely face the first teeth, a magnetic reluctance existing between one of the first teeth and one of the second teeth that entirely faces the one of the first teeth is smaller than a magnetic reluctance existing between the one of the first teeth and another one of the first teeth neighboring the one of the first teeth, and, when the second teeth moves so that the one of the second teeth is placed at a right middle position between the one of the first teeth and the another one of the first teeth, a magnetic reluctance passing through the one of the second teeth to exist between the one of the first teeth and the another one of the first teeth neighboring to the one of the first teeth is larger than a magnetic reluctance existing between the one of the first teeth and another one of the first teeth neighboring the one of the first teeth.

Still further, preferably, the magnetic reluctances are adjustable by a distance between the one of the first teeth and another one of the first teeth neighboring the one of the first teeth, or a distance between the one of the first teeth and the one of the second teeth.

The description still further discloses that the rotary electrical machine may further comprise a movement drive force transmitting mechanism for moving the second stator core in the rotational direction or the reverse rotational direction of the rotor.

Still further, preferably, the movement of the second stator core relative to the first stator core is a reciprocal movement within a predetermined angle in the rotational direction or the reverse rotational direction of the rotor, or wherein the movement of the second stator core relative to the first stator core is an intermittently rotational movement in the rotational direction of the rotor.

Still further, preferably, the plurality of the first teeth and the winding are unitarily molded together, and/or wherein the plurality of the second teeth and the winding are unitarily molded together.

Still further, preferably, the second teeth are provided in the same number as the first teeth.

Preferably, the end surfaces of the first teeth opposed to the rotor are larger in size than the end surfaces on the opposite side thereof.

In the following, the present invention is explained in greater detail with respect to several embodiments thereof in conjunction with the accompanying drawings, wherein:
- Fig. 1: is a side elevational view of an electromotive two-wheeled vehicle as an example of a device on which an axial gap type rotary electrical machine as a rotary electrical machine according to a first embodiment is mounted,
- Fig. 2: is a cross-sectional view, showing a structure of the axial gap type electric motor (electric motor) together with a structure around the rear end of a rear arm,
- Fig. 3: shows a structure of a stator of the electric motor and the circumference thereof, as viewed from the side of the rear wheel,
- Fig. 4: is a perspective view, simply and comparatively showing a schematic structure of the major part of the stator with a rotor disposed to oppose to the stator and its rotational shaft shown in an exploded configuration,
- Fig. 5 (a) through (f): are illustrations for describing the drive principle of the axial gap type electric motor,
- Fig. 6: shows that one tooth opposes to both of a N pole magnet and a S pole magnet in an actual arrangement such that the N pole magnet and the S pole magnet are positioned close to each other,
- Fig. 7: is an illustration for describing reasons for the limit of the rotational speed of a normal axial gap type electric motor,

- Fig.8: schematically shows a field magnet weakening control method used for increasing the rotational speed of the normal axial gap type electric motor,
- Fig. 9: is a cross sectional view, showing the axial gap type electric motor in the first embodiment together with the structure around the rear end of the rear arm,
- Fig. 10: is a perspective exploded view of the axial gap type electric motor of the first embodiment,
- Fig. 11: is a perspective view, showing a condition under which the axial gap type electric motor of the first embodiment is completely assembled, together with a rotation control system,

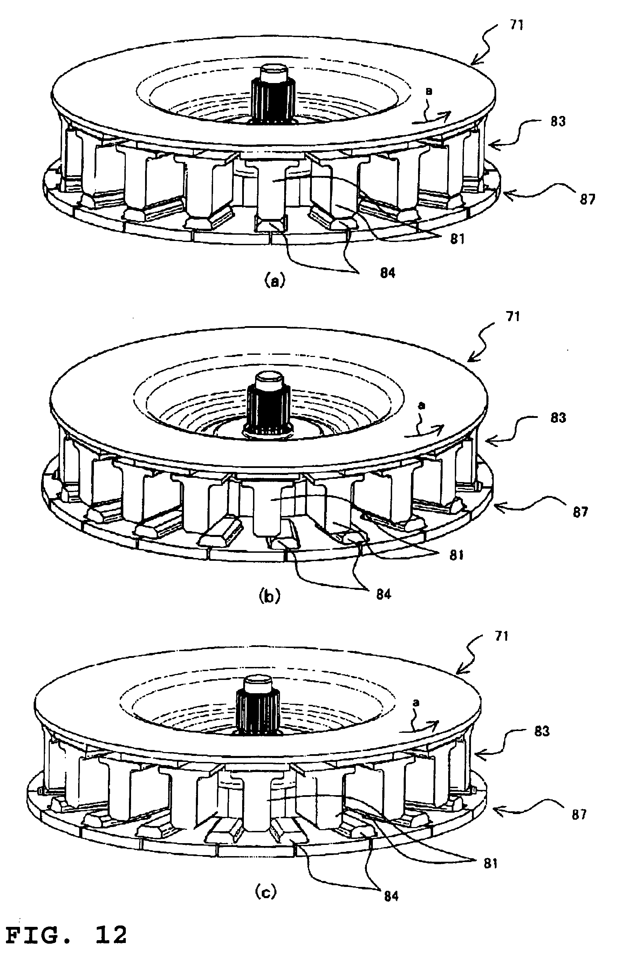

- Figs. 12 (a), (b) and (c): are illustrations for describing a pivot angle and an operation of a reciprocal movement made by a second stator section of the axial gap type electric motor in the first embodiment along the rotational direction of the rotor relative to a first stator section. In other words, Figs. 12(a), (b) and (c) are views for explaining the rotational angle and through which the second stator is reciprocable along the rotating direction of the rotor with respect to the first stator and the motion of the second stator in the axial gap type electric motor according to the first embodiment,
- Figs. 13 (a) and (b): are illustrations for describing the principle of the rotation control of the axial gap type electric motor of the first embodiment made in a range from a high torque low speed rotation to a low torque high speed rotation. In other words, Fig. 13 is a view for explaining the principle of the rotation control from high-torque low-speed rotation to low-torque high-speed rotation in the axial gap type electric motor according to the first embodiment,
- Figs. 14 (a) through (e): are illustrations for describing a gap that causes a magnetic reluctance,

- Figs. 15 (a) and (b): shows a structure of the major part of an alternative (first one) of the axial gap type electric motor of the first embodiment,
- Figs. 16 (a) through (d): show a structure of the major part of another alternative (second one) of the axial gap type electric motor of the first embodiment,
- Figs. 17 (a) through (d): show a structure of the major part of an axial gap type electric motor in a second embodiment,
- Figs. 18 (a) and (b): show an alternative, in which the opposing surfaces of the rotor and the stator, and the opposing surfaces of the stator sections, which are two portions of the divided stator, form surfaces other than horizontal surfaces,
- Fig. 19: is a cross sectional view, showing a structure of a radial gap type electric motor according to a third embodiment,
- Fig. 20: is a cross sectional view, showing a structure of a radial gap type electric motor according to a fourth embodiment,
- Fig. 21: is a perspective view, showing a structure of a radial gap type electric motor according to a fifth embodiment,
- Fig. 22: shows a relationship of displacement of a rotational phase between the first rotor section and the second rotor section when the rotor makes a high speed low torque rotation in the structure of the axial gap type electric motor according to the fifth embodiment,
- Fig. 23: shows a structure of the major part of the axial gap type electric motor according to a sixth embodiment, and

- Fig. 24: shows a relationship of displacement of the rotational phase between the first rotor section and the second rotor section when the rotor makes a high speed low torque rotation in the structure of the axial gap type electric motor according to the sixth embodiment.

Hereunder, embodiments are described with reference to the accompanying drawings.

### (Electromotive two-wheeled vehicle on which rotary electrical machine is mounted)

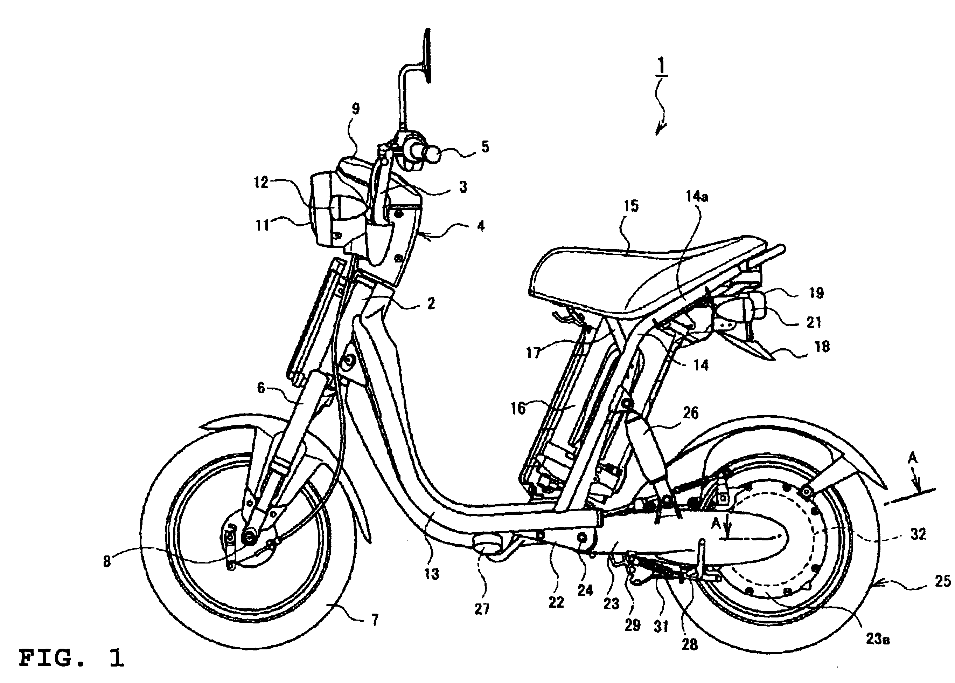

Fig. 1 is a side elevational view of an electromotive two-wheeled vehicle as an example of a device having an axial gap type rotary electrical machine thereon, which is a rotary electrical machine according to a first embodiment. As shown in Fig. 1, the electromotive two-wheeled vehicle of this embodiment has a head pipe 2 disposed at a forward top of its vehicle body. A steering shaft (not shown) for changing a direction of the vehicle body is inserted into the head pipe 2 for pivotal movement.

A handlebar supporting portion 4 to which handlebars 3 are fixed is attached to a top end of this steering shaft, and a grip 5 is attached to each end of the handlebars 3. Also, in Fig. 1, the grip on the right hand side (the verso of Fig. 1), invisible because of being hidden, forms a throttle grip that is rotational.

A front fork 6 having a right and left pair is coupled with a bottom of the head pipe 2 to extend downward. The pair of the front fork 6 has a front axle 8 interposed therebetween under being suspended condition for damping and bearing a front wheel for rotation.

The foregoing handlebar supporting portion 4 has indicators 9 disposed in front of the handlebars 3. A head lamp 11 is fixed to a lower portion of the indicators 9. Flasher lamps 12 (one of the flasher lamps 12 positioned on the right hand side, i.e., on the verso of Fig. 1, is invisible because of being hidden) are positioned on both sides of the head lamp 11.

A right and left pair of vehicle body frame 13 each generally forming an L-shape in a side view extends rearward relative to the vehicle body. Each vehicle body frame 13 is a round pipe that obliquely extends downward rearward of the vehicle body and then extends horizontally rearward to generally form the L-shape in the side view.

A pair of right and left seat rails 14 are coupled with respective rear side ends of the pair of the vehicle body frames 13 to further obliquely extend rearward upward from the respective rear side ends of the vehicle body frames 13. A rear side end 14a of each seat rail 14 is curved rearward along a configuration of a seat 15.

A battery 16 is detachably disposed between the pair of the right and left seat rails 14. This battery 16 is constructed to incorporate a plurality of second cells which are rechargeable. A seat stay 17 having a reversed U shape is welded to a portion of the pair of the right and left seat rails 14 positioned adjacent to the foregoing curved portions to slant upward forward relative to the vehicle body. The foregoing seat is placed at a portion surrounded by the seat stay 17 and the pair of the right and left seat rails 14 such that the seat 15 can move between opening and closing positions with its forward end pivotal vertically.

Also, a rear fender 18 is attached to the rear ends of the seat rails 14, and a tail lamp 19 is attached to a rear surface of the rear fender 18. Further, flasher lamps 21 (one of the flasher lamps 21 positioned on the right hand side, i.e., the verso of Fig. 1 is invisible because of being hidden) are positioned on both sides of the tail lamp 19.

On the other hand, a rear arm bracket 22 (in Fig. 1, only the bracket 22 on the recto is shown) is welded to a horizontal portion of each one of the pair of the right and left vehicle body frames 13 below the seat 15. A forward end of a rear arm 23 is supported by the pair of the right and left rear arm brackets 22 for vertical swing movement via a pivot shaft 24.

A rear wheel 25 as drive wheel is supported for rotation at a center of a generally circularly formed rear end 23a of the rear arm 23 for rotation. The rear arm 23 and the rear wheel 25 are suspended by a rear shock absorber for damping.

A pair of right and left footsteps 27A (in Fig. 1, only the bracket 22 on the recto is shown) are disposed below the respective horizontal portions of the pair of the right and left vehicle body frames 13. Also, a side stand 28 is supported by the rear arm 23 on the left hand side via a shaft 29 for pivotal movement in the rear of the footstep 27. This side stand 28 is urged by a return spring 31 toward a retracted position.

A drive unit including an axial gap type electric motor 32 that is connected to drive the rear wheel 25 is incorporated within the rear end 23a of the rear arm 23.

Now, a structure of an axial gap type electric motor and an operation thereof that are the basis of the present embodiments is described, and then a structure of the axial gap type electric motor 32 and an operation thereof according to a first embodiment is described.

### (Basic structure of axial gap type electric motor)

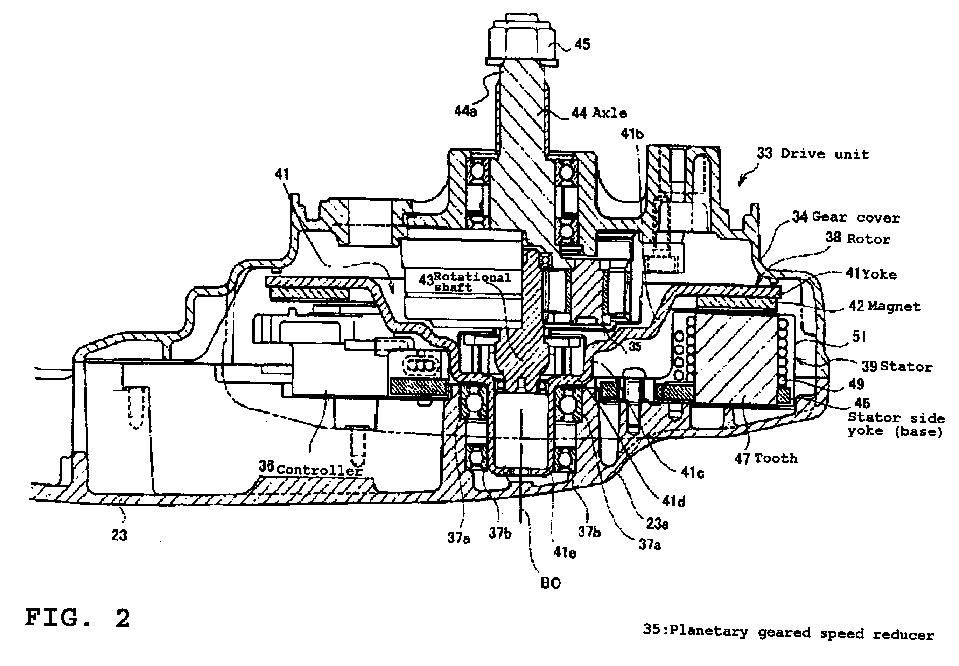

Fig. 2 is a cross-sectional view, showing a structure of the axial gap type electric motor (hereunder, simply can be called electric motor) that is the basis of the present embodiments, together with a structure around the rear end 23a of the rear arm 23. Incidentally, Fig. 2 is a cross-sectional view taken along the line A-A of Fig. 1 (partial side view). However, the rear wheel 25 is not shown.

In Fig. 2, a drive unit 33 is incorporated within a space defined inside of a gear cover 34 attached to a right side (in Fig. 2, recto) of the rear end 20a of the rear arm 23. The drive unit 33 includes the electric motor, a planetary geared speed reducer 35, a controller 36 and so forth together unitarily built in.

As shown in Fig. 2, the electric motor includes a rotor 38 supported by bearings 37a, 37b at the rear end 20a of the rear arm 23 for rotation about a center axis BO of the bearings 37a, 37b; and a generally annular (or doughnut-like shaped) stator 39 fixed to an inside surface of the rear end 23a of the rear arm to oppose to the rotor 38.

As shown in Fig. 2, the rotor 38 has a rotor side yoke 41 (41 a-41 e) which has a generally gambrel-like shape convex toward the rear end 23a of the rear arm 23.

That is, the rotor side yoke 41 includes a annular section 41a opposing to the stator 39; a tapered section 41 b extending generally in a truncated cone shape toward the rear end 23a of the rear arm 23 from an inner circumferential periphery of the annular section 41 a; a first cylindrical section 41 c convexly extending along the center axis BO toward the rear end 23a of the rear arm 23 from a terminal end of the tapered section 41b; a annular section 41d extending in a radial direction of the rotation toward the center axis BO from a terminal end (in Fig. 2, bottom end) of the cylindrical section 41c; and a second cylindrical section 41e convexly extending along the center axis BO toward the rear end 23a of the rear arm 23 from an inner circumferential periphery of the annular section 41d.

The second cylindrical section 41 e is supported by the bearings 37a, 37b for rotation about the center axis BO to form a rotational shaft of the rotor 38. Thus, a rotational center of a rotational shaft 43 of the rotor 38 corresponds to the center axis BO of the bearings 37a, 37b.

Also, the rotor 38 has a plurality of field magnets 42 fixedly positioned on a stator side opposing surface of the annular section 41 a of the rotor side yoke 41. These field magnets 42 are located annularly and coaxially about the center axis BO and circumferentially along the annular section 41a. The field magnets 42 are positioned in such a manner that the N pole and the S pole alternately appears. Alternatively, the field magnets 42 can be made from a single magnet member having the N pole and the S pole alternately magnetized, both of which are formed with dielectric body portions that are permanently polarized along the same circumferential surface of a disk or ring.

A toothed rotational shaft 43 is fixedly attached to a rear wheel side end of the second cylindrical section (rotational shaft) 41 e of the rotor 38 to extend coaxially with the rotor 38 (the second cylindrical section (rotational shaft) 41 e). This toothed rotational shaft 43 rotates together with the rotor 38.

On the other hand, the planetary geared speed reducer 35 is coupled with the toothed rotational shaft 43 and is built in the tapered section 41 b of the rotor side yoke 41. The planetary geared speed reducer 35 and the electric motor (the rotor 38 and the stator 39) overlap with each other in a width direction of the vehicle.

The planetary geared speed reducer 35 is coupled with a rear axle 44 which extends coaxially with the toothed rotational shaft 43, and has a function to reduce a speed of the rotation of the electric motor (rotation of the second cylindrical section (rotational shaft) 41e) and transmit the rotation to the rear axle 44 through the toothed rotational shaft 43.

A nut 45 is detachably screwed onto the tip 44a of the rear axle 44 projecting from the gear cover 34 for the rear axle 44. The rear wheel 25 shown in Fig. 1 is fastened by the nut 45 that is screwed under a condition that the rear wheel 25 is put on the rear axle 44 to be fixedly attached to the rear axle 44.

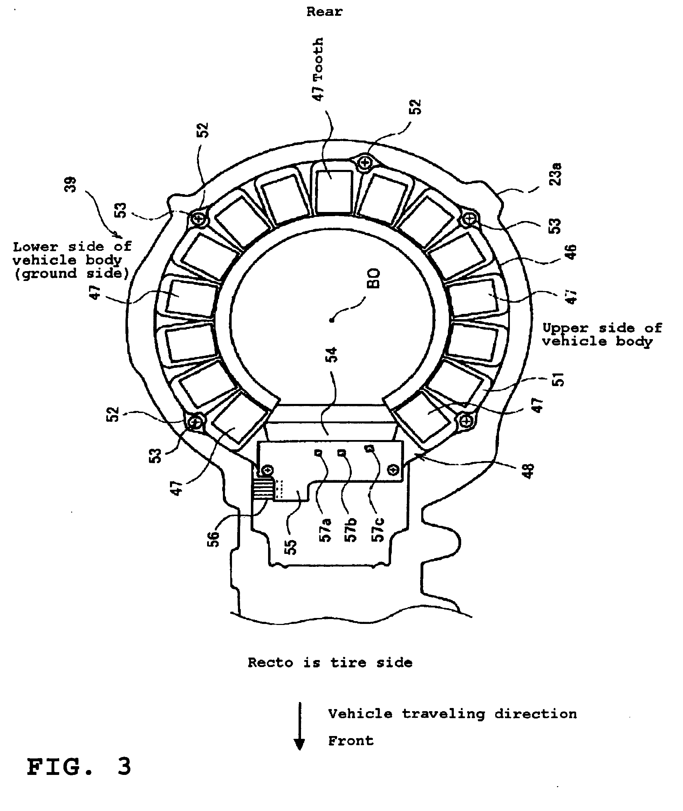

Fig. 3 is an illustration, showing a structure of the stator 39 of the electric motor and the circumference thereof looked from the side of the rear wheel 25. That is, in Fig. 3, the front side of the illustration corresponds to a right hand side of the vehicle body of the electromotive two-wheeled vehicle 1, the left side of the illustration corresponds to a lower side of the vehicle body, the upper side of the illustration corresponds to a rear side of the vehicle body, and the lower side of the illustration corresponds to a front side of the vehicle body.

In Fig. 3 (see Fig. 2 also), the stator 39 is fixedly positioned at the rear end 23a of the rear arm 23, and includes a stator side yoke 46 that has a lamination layer structure in which, for example, circular steel sheets are laminated in the center axis direction. The stator side yoke 46 has a reversed C shape around the center axis BO. In other words, the stator side yoke 46 is shaped as a circle one portion of which is cut away.

The stator side yoke 46 of the stator 39 has generally rectangular tooth receiving openings, which number is multiples of three, circumferentially extending. The stator 39 has teeth 47 fixedly positioned in the respective tooth receiving openings with a lower portion (in Fig. 3, the side end of the sheet) of each tooth 47 inserted into the respective recess, and the teeth 47 are circumferentially arranged on the stator side yoke 46 at regular intervals (circumferential pitches).

Each tooth 47 is a lamination layer of steel sheets, and is placed such that a top end (in Fig. 3, side surface of the recto) thereof is spaced apart from the respective field magnets 42 of the rotor 38 in the axial direction of the rotational shaft 43 to oppose to the field magnet 42.

Additionally, the circumferential pitch means an angle defined between line segments; one of which extends from a center of the opposing surface of the tooth 47 that opposes to the corresponding field magnet 42 to the center axis BO of the bearings 37a and 37b along the upper surface; and another one of which extends from a center of the opposing surface of the neighboring tooth 47 that opposes to the corresponding field magnet 42 to the center axis BO of the bearings 37a and 37b along the upper surface.

The stator side yoke 46 that fixedly holds the teeth 47 is shaped as the circle which center is consistent with the center axis BO of the bearings 37a and 37b and one portion of which is cut away, as described above. Thus, the teeth 47, which number is multiples of three, is arranged along the circular configuration which one portion is cut away. Thereby, teeth of three phases (U phase, V phase and W phase) corresponding to the cut-away portion of the circle are omitted. Hereunder, the cut-away portion of the circle is called a teeth omitted portion 48.

Also, the stator 39 includes a coil 49 (see Fig. 2) wound around each tooth 47; a molded section 51 in which the respective teeth 47 and the coils 49 are molded with resin or the like; and a plurality of flanges 52 formed on an circumferential outer surface of the molded section 51.

Each flange 52 has a bolt hole for attaching the molded section 51 including the teeth 47 and the coils 49 to the rear end 23a of the rear arm 23. Bolts inserted into the bolt holes are screwed onto the rear end 23a of the rear arm 23 to fixedly position the stator 39 on the rear end 23a of the stator 39.

Also, an inverter 54 which can supply electric power to the stator 39 by being electrically connected to the stator 39 is fixed to the teeth omitted portion 48 through an elastic material, which is not shown, made of rubber or the like. Further, an encoder substrate 55 is placed in the teeth omitted portion 48. This encoder substrate 55 and the inverter 54 are electrically coupled with each other through a wire harness 56 that is covered with a flexible coating (a flexible substrate or the like can replace the harness).

Magnetic pole detecting elements 57a, 57b and 57c such as a Hall sensor, for example, are mounted on the encoder substrate 55. The magnetic pole detecting elements 57a, 57b and 57c are placed at positions where those elements detect a moment when each electrical angle of the U phase, V phase and W phase of the electric motor becomes 180 degrees (for example, a coil current is the maximum).

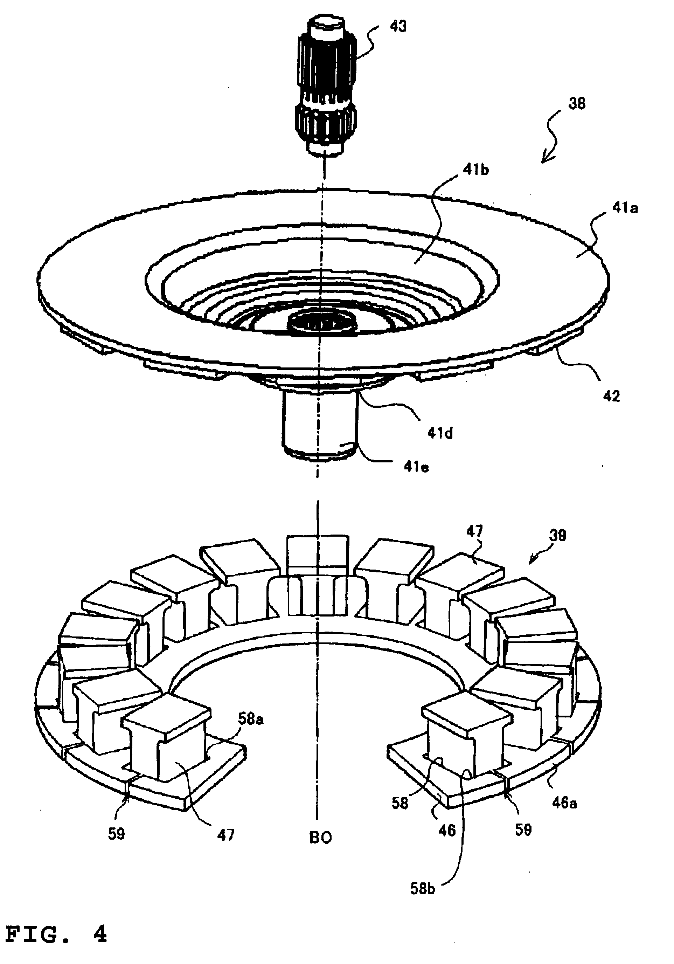

Fig. 4 is a perspective view, showing a schematic structure of the major part of the stator 39 of Fig. 3 together with the rotor 38 placed to oppose to the stator 39 and the rotational shaft 43 thereof. Additionally, the coil 49 shown in Fig. 2; the molded portion 51 shown in Figs. 2 and 3; and the flanges 52, the inverter 54, the encoder substrate 55 shown in Fig. 3; and so forth are omitted from Fig. 4.

As shown in Fig. 4, on the stator side yoke 46, the respective recesses 58 each of which is formed in a generally rectangular shape and in which the respective tooth 47 is inserted and fixed are arranged in the circular configuration, the portion of which is cut away at the circular pitches. A pair of shorter side inner surfaces 58a, 58b of each insert hole are adapted to direct to the center axis BO.

Further, a steel sheet portion next to each insert hole and positioned between a circumferential outer surface 46a of the stator side yoke 46 and an inner side surface 58b located closer to the circumferential outer surface 46a is cut to make a slit 59 extending radially such that each insert hole communicates outside.

The respective teeth 47, three of which form one set of the U phase, V phase and W phase to which a two-pole/three-phase alternating current is applied, are sequentially positioned on the stator side yoke 46 except for the teeth omitted portion 48. Even number of the field magnets 42 having the polar pair of the N pole and the S pole are disposed on the rotor 38 at regular intervals corresponding to the intervals of the set of the three phases.

Of course, as described above, the field magnets 42 can be formed from a single magnet member having the N pole and the S pole alternately magnetized, both of which are formed with dielectric body portions that are permanently polarized along the same circumferential surface of a disk or ring.

That is, for example, the field magnets 42 are positioned in such a manner that either four field magnets 42 each having a polar pair, or one field magnet having four polar pairs oppose to a range involving arrangement intervals of six teeth 47 at all times. Also, the field magnets 42 are positioned in such a manner that either six field magnets 42 each having a polar pair, or one field magnet having six polar pairs oppose to a range involving arrangement intervals of nine teeth 47 at all times.

Incidentally, Fig. 4 shows fifteen teeth 47 in total. Originally, the stator can have 18 teeth 47; however, three of them are omitted to place the encoder substrate 55 of Fig. 3 there.

Thus, the electric motor is constructed in such a manner that the field magnets 42 each having 12 polar pairs exist to oppose to a range involving arrangement intervals of fifteen teeth 47 (including the omitted portion for three teeth) all the times, whether odd number of field magnets 42 are used or one field magnet is used.

Likewise, the electric motor might be constructed in such a manner that the field magnets 42 each having ten polar pairs exist to oppose to a range involving arrangement intervals of fifteen teeth 47 in total all the times, whether odd number of field magnets 42 are used or one field magnet is used.

### (Drive principle of axial gap type electric motor)

Next, a drive principle of the axial gap type electric motor constructed as described above is described.

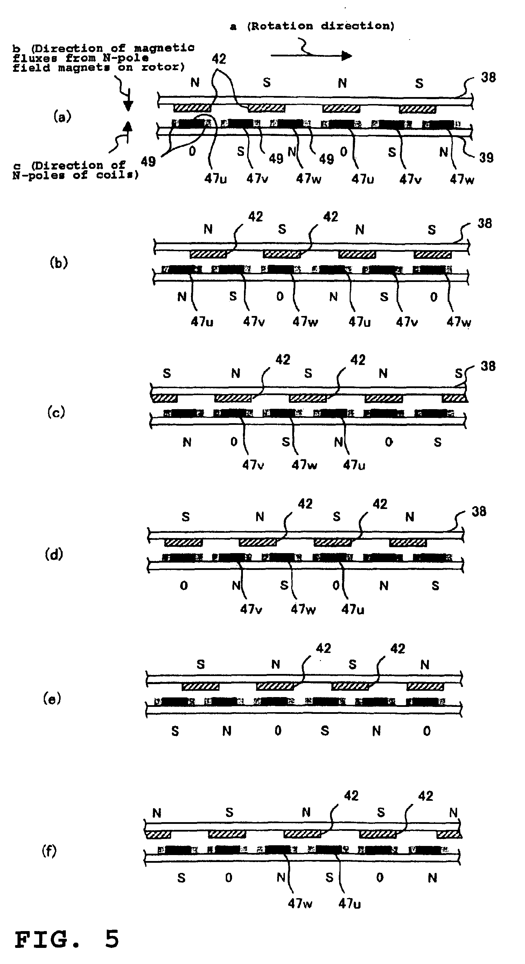

Figs. 5(a) to (f) are illustrations for describing the drive principle of the axial gap type electric motor. In Fig. 5(a), the arrow "a" indicates a rotational direction of the rotor 38, while the arrow "b" indicates the plus direction of magnetic fluxes, when a direction of the magnetic fluxes coming from the N pole field magnet 42 (hereunder, simply called magnet 42) is decided to be plus, and a direction of the magnetic fluxes coming from the S pole magnet 42 is decided to be minus. However, all the fluxes do not go right downward as indicated by the arrow "b," and some of them go obliquely downward. The arrow "b" thus is given to mean that generally the magnetic fluxes go downward.

Also, the arrow "c" indicates the plus direction of magnetic fluxes, when a direction of magnetic fluxes having the N polarity, which are generated in the coils 49 wound around the respective teeth 47 of the stator 39 with a current being supplied to the coils 49 and exited by the teeth 47 (47u, 47v and 47w) that are core members, is decided to be plus, and a direction of magnetic fluxes having the S polarity is decided to be minus. However, all the fluxes do not go right downward as indicated by the arrow "b," and some of them go obliquely downward. The arrow "b" thus is given to mean that generally the fluxes go downward.

Also, in Figs. 5(a) to (f), the teeth 47 of the U phase are indicated by reference numeral 47u, the teeth 47 of the V phase by 47v, and the teeth 47 of the W phase by 47w.

Fig. 5(a) shows a condition under which the N pole magnets 42 are positioned right above the U phase teeth 47u, while the S pole magnets 42 are positioned between the respective V phase teeth 47v and the respective W phase teeth 47w.

Under this condition, a current toward the coils 49 of the U phase teeth 47u is shut down, no magnetic flux is generated in the teeth 47u, and only the magnetic fluxes from the N pole magnets 42 flow through the teeth 47u.

A current that can generate magnetic fluxes having the S polarity flows through the coils 49 of the V phase teeth 47v, and the teeth 47v excites the S pole magnetic fluxes. The excited S pole magnetic fluxes of the teeth 47v repel the S pole magnets 42, i.e., the same pole magnets, in the direction of the arrow "a."

On the other hand, a current that can generate N pole magnetic fluxes flows through the coils 49 of the W phase teeth 47w, and the teeth 47w excite the N pole magnetic fluxes. The excited N pole magnetic fluxes of the teeth 47w attract the S pole magnets 42, i.e., the opposite pole magnets, in the direction of the arrow "a."

The rotor 38 rotates in the direction of the arrow "a" by the torque toward the direction of the arrow "a" caused by the force of repulsion and the force of attraction, and transfers to a condition shown in Fig. 5(b). That is, the N pole magnets 42 are positioned between the respective U phase teeth 47u and the respective V phase teeth 47v, while the S pole magnets 42 are positioned right above the W phase teeth 47w.

Under this condition, the direction of the current is changed to generate N pole magnetic fluxes in the coils 49 of the U phase teeth 47u. The teeth 47u excite the N pole magnetic fluxes, and the excited N pole magnetic fluxes repel the N pole magnets 42, i.e., the same pole magnets, in the direction of the arrow "a."

On the other hand, the direction of the current is changed to generate S pole magnetic fluxes in the coils 49 of the V phase teeth 47v. The teeth 47u excite the S pole magnetic fluxes, and the excited S pole magnetic fluxes attract the N pole magnets 42, i.e., the opposite pole magnets, in the direction of the arrow "a."

Also, the current toward the coils 49 of the W phase teeth 47w is shut down, no magnetic flux is generated in the teeth 47w, and only the magnetic fluxes from the S pole magnets 42 flow through the teeth 47w.

Also under this condition, the rotor 38 rotates in the direction of the arrow "a" by the torque toward the direction of the arrow "a" caused by the force of repulsion and the force of attraction, and transfers to a condition shown in Fig. 5(c). Relationships between the teeth 47 and the magnets 42 under the condition are the same as those which shown in Fig. 5(a). However, each relationship between the respective tooth 47 and the respective N pole and S pole magnets 42 is shifted one by one in the direction of the arrow "a."

That is, the N pole magnets 42 are positioned right above the V phase teeth 47v, while the S pole magnets 42 are positioned between the respective W phase teeth 47w and the respective U phase teeth 47u which is one of the neighboring sets of the three phases.

The current of the teeth 47v, the teeth 47w and the neighboring teeth 47u and the polarity of the magnetic fluxes generated in the coils 49 under the condition of Fig. 5(c) is the same as the current of the teeth 47u, the teeth 47v and the teeth 47w of sets of the three phases and the polarity of the magnetic fluxes generated in the coils 49 under the condition of Fig. 5(a), respectively.

That is, under the condition, the torque in the direction of the arrow "a" is generated by the repulsive force and the attractive force, and the rotor 38 rotates in the direction of the arrow "a" by the torque and transfers to a condition shown in Fig. 5(d). The relationships between the teeth 47 and the magnets 42 under the condition is the same as those which shown in Fig. 5(b). However, also under this condition, each relationship between the respective tooth 47 and the respective one of the N pole and S pole magnets 42 is shifted one by one in the direction of the arrow "a."

That is, the N pole magnets 42 are positioned between the respective V phase teeth 47v and the respective W phase teeth 47w, while the S pole magnets 42 are positioned right above the U phase teeth 47u which is one of the neighboring sets of the three phases.

The current of the teeth 47v, the teeth 47w and the neighboring teeth 47u and the polarity of the magnetic fluxes generated in the coils 49 under the condition of Fig. 5(d) is the same as the current of the teeth 47u, the teeth 47v and the teeth 47w of the sets of the three phases and the polarity of the magnetic fluxes generated in the coils 49 under the condition of Fig. 5(b), respectively.

Hereunder, similarly, the rotor 38 transfers to a condition of Fig. 5(e), and further transfers to a condition of Fig. 5(f). The N pole magnets 42 thus are positioned between the respective W phase teeth 47w and the respective teeth 47u of the sets of the three phases. One drive relationship, which is shown on the left hand side of Fig. 5(a), between one set of the three phases including the U phase teeth 47u, V phase teeth 47V and W phase teeth 47w and the pair of N pole magnet 42 and S pole magnet ends.

Continuously, again, as shown in Fig. 5(a), another drive relationship between another one set of the three phases including the U phase teeth 47u, V phase teeth 47V and W phase teeth 47w and another pair of N pole magnet 42 and S pole magnet neighboring the pair of N pole magnet 42 and S pole magnet, the foregoing relationship of which has ended, and positioned upstream of the former pair starts as shown in Figs 5(a) to (f).

Additionally, in the description of Figs. 5 (a) to (f), the positioning relationships between the magnets 42 and the teeth 47 are divided into six stages for easy understanding. Actually, however, as the applied current to the coils 49, a current depicting a sine curve is sequentially applied to three teeth 47 of each set of the three phases neighboring each other at regular phase differences. The direction and magnitude of the magnetic fluxes generated in the coils 49 by the applied current vary because the magnets 42 of the rotor rotate.

Also, respective distances between the N pole and S pole magnets 42 in an actual arrangement are shorter than those which are shown in Figs. 5(a) to (f), and one tooth 47 can oppose to both of the N pole magnet 42 and the S pole magnet 42. Additionally, if a single magnet having multiple polar pairs is used instead of the odd number of magnets 42, the N pole and the S pole contact with each other without having no space therebetween.

The relationship shown in Figs. 5(a) to (f) is sequentially shifted in the rotational direction to one another among all the sets of the three phases of the teeth 47 and the pairs of two magnets 42 in association with neighboring teeth and magnets. That is, two teeth of the set of three phases of teeth 47 and one tooth of the neighboring set of three phases of teeth 47 makes a next set of three phases, and one magnet of the pair of two magnets 42 and one of the neighboring pair of two magnets 42 makes a next pair of magnets.

The current for changing the directions of the magnetic fluxes of the coils is changed under the control of the inverter 54, and a timing of current application is given also under the control of the inverter 54 based upon the detection of rotational positions of the N pole magnet 42 and the S pole magnet 42 by the magnetic pole detecting elements 57a, 57b and 57c shown in Fig. 3.

As thus described, in the axial gap type motor, magnetic circuits are made between the rotor 38 and the stator 39, and the excitation of the respective teeth 47 of the stator 39 is sequentially changed corresponding to the N pole and S pole of the magnets 42 of the rotor 38 via the coils wound around the respective teeth 47, thereby rotating the rotor 38 using the repulsive force and the attractive force of the magnets 42 of the rotor 38 against the excitation of the respective teeth 47.

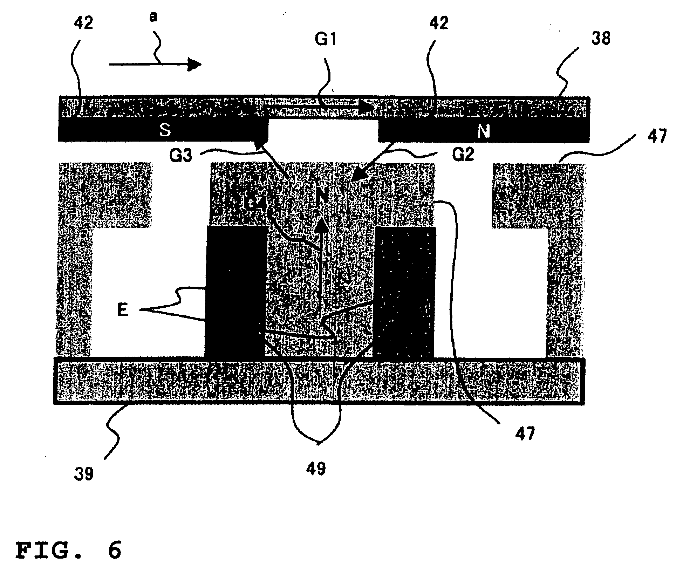

Fig. 6 is an illustration, showing that one tooth 47 opposes to both of the N pole magnet 42 and the S pole magnet 42 in an actual arrangement in such a manner that the N pole magnet 42 and the S pole magnet 42 are positioned close to each other. In this illustration, the arrow "a" again indicates the rotational direction of the rotor 38. Also, a direction of the magnetic fluxes flowing between the N pole magnet 42 and the S pole magnet is indicated by arrows G1, G2 and G3. Further, this condition is the same as the condition occurring transitionally when the conditions shown in Figs. 5(a) to (f) are shifted to one another.

In Fig. 6, a current flows through the coil 49 wound around the tooth 47 on the stator 39 counterclockwise in a top plan view as indicated by an arrow E. Therefore, magnetic fluxes generated in the coil 49 and excited by the tooth 47 flow as indicated by an arrow G4, and cross the magnetic fluxes flowing between the N pole magnet 42 and the S pole magnet 42. On this occasion also, the N pole magnet 42 repels and the S pole magnet 42 attracts to generate the torque in the rotor 38 in the direction of the arrow "a."

In Fig. 6, when the magnets 42 move to other positions relative to the tooth 47, and the magnet 42 on the left hand side is replaced by the N pole magnet and the magnet on the right hand side is replaced by the S pole magnet, the direction of the current that is given to the tooth 47 is reversed from the direction indicated by the arrow E, i.e., the direction is changed to the clockwise direction in view of the top side of the illustration.

By the way, in the electric motor having the basic structure described above, the rotational power thereof does not become larger than a certain limit because of a structural restriction in its rotational speed. If converted into a speed of a motorcycle, approximately 20 km per hour is a limit in order to obtain a torque that is necessary for the vehicle, shown in Fig. 1, to run. However, it is understood that the data can vary in accordance with diameters of tires, gear ratios of drive gear systems, specifications of motors and so forth.

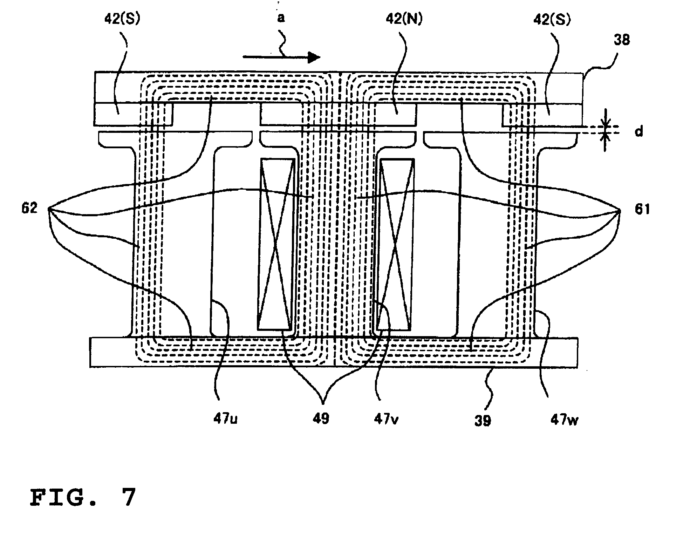

Fig. 7 is an illustration to describe reasons for the limit of the rotational speed of a normal electric motor. Fig. 7 shows positioning conditions of the N pole magnet 42, the V phase tooth 47v and others around them shown in Fig. 5(c).

Additionally, Fig. 7 only shows the coil 49 for the V phase tooth 47v, and omits the coils for the other teeth. As described with reference to Fig. 5, no current is applied to the coil 49 when the magnet 42 is positioned right above the tooth 47.

In Fig. 7, the rotor 38, the stator 39, and teeth 47 (47u, 47v and 47w) are made of a soft magnetic material. Because a distance "d" between the opposing surfaces of the magnet 42 and the tooth 47 is extremely small, a space magnetic reluctance is low. Thus, the magnetic fluxes flowing between the N pole magnet 42 (N) and S pole magnet 42 (S) are divided into two portions, and one of them becomes a magnetic flux flow 61 while another one of them becomes a magnetic flux flow 62 to flow through the magnetic poles of the magnets 42, the rotor 38, the teeth 47 and the stator 39.

Thus, larger magnetic fluxes involving the foregoing two of the magnetic flux flows 61 and 62 both of which merge together pass through the coil 49 of the tooth 47v via the tooth 47v positioned within the coil 49.

While the rotor 38 rotates in the direction of the arrow "a," a current is generated in the coil 49 according to the Faraday's electromagnetic induction law (or according to Fleming's law), because the fluxes passing through the coil 49 cross the coil 49. The current generated in the coil 49 in turn generates magnetic fluxes having the S polarity from the coil 49.

That is, the S pole magnetic fluxes generated in the coil 49, i.e., in the tooth 47, by the current generated in the coil 49 functions to attract the N pole magnet 42 (N).

In other words, resistive force (magnetic reluctance) affects the rotation of the rotor 38. The faster the rotation of the rotor 38, the faster the speed of the magnetic fluxes, which involves the foregoing two of the magnetic flux flows 61 and 62 merging together in the coil 49, crossing the coil 49. The faster the speed of the magnetic fluxes crossing the coil 49, the larger the current generated in the coil 49. The larger the current generated in the coil 49, the larger the amount of the magnetic fluxes generated in the tooth 47v by the current to increase the magnetic reluctance of the rotor 38.

Before long, the increased magnitude of the rotational power of the rotor 38 and the magnetic reluctance reach the balance with each other. This balance condition is the limit of the rotational speed described above. Of course, the limit can goes up with an increase of the electric supply. However, it is not a good plan because the consumption of the electricity increases in geometric progression.

As a method of improving the weak point of the rotational characteristic of the axial gap type electric motor to increase the rotational power, i.e., a method of shifting the rotational condition to a low torque high speed rotation from the high torque low speed rotation, a field magnet weakening control method is known.

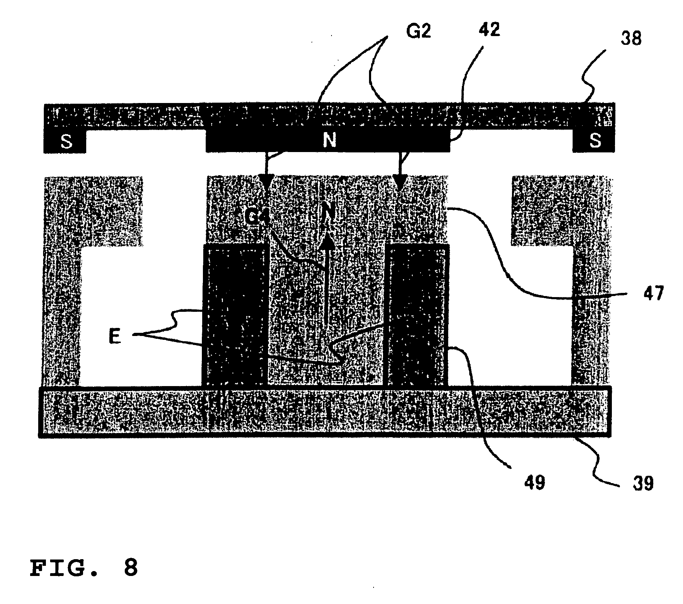

Fig. 8 is an illustration, schematically showing the field magnet weakening control method. Under the condition such that no current is applied to the coil 49 when the N pole magnet 42 (as to S pole magnet 42, the same) is positioned right above the tooth 47 as described with reference to Fig. 7, a large resistance affects the rotation of the rotor 38 when the rotational speed increases.

As shown, however, if a moderate current is applied to the coil 49 in the direction indicated by the arrow E when the N pole magnet is positioned right above the tooth 47 (as to S pole magnet 42, reverse direction), magnetic fluxes having the N polarity are generated in the direction indicated by the arrow G4 (as to S pole magnet 42, reverse direction).

The magnetic fluxes generated by this coil function to weaken the N pole magnetic fluxes that go to the tooth 47 from the N pole magnet 42 as indicated by the arrow G2. That is, because the magnetic fluxes function to weaken the magnetic flux flows 61 and 62 shown in Fig. 7, the magnetic reluctance decreases and the rotational power becomes large, corresponding to the weaken magnetic flux flows. Namely, the low torque high speed rotation can be realized.

In the field magnet weakening control method, a new current having a phase that is inconsistent with the phase of the alternating current applied to the tooth 47 having three phases, which are the U phase, V phase and W phase, applied at a moment when the electromagnets 42 shown in Fig. 5 position right above the teeth 47and the current becomes zero, that is, a current that generates magnetic fluxes in the direction of weakening the magnetic fluxes going to the coils from the electromagnets 42 at the moment when the current becomes zero is further added to a current for rotating (for generating torque) to be applied to the coil. That is, a current that does not contribute to the rotational torque itself is newly applied.

Additionally, as a method to realize the low torque and high speed rotation of the axial gap type electric motor, there is another method in which the opposing distance between the rotor and the stator is enlarged. However, this method is considered to be not preferable since the length of the axis of the rotational shaft is caused to be longer, resulting in a deficiency of deflection thereof.

In other words, additionally, it is described above that, as a method to realize the low torque and high speed rotation of the electric motor, there is another method to enlarge the opposing distances of the rotor and the stator in the rotational direction, i.e., to enlarge the magnetic gaps between the rotor and the stator.

However, the inventors of the present invention noticed that the flow of the magnetic flux flow was unstable in the magnetic gaps between the rotor and the stator. The present invention originates from the inventors' notice of the fact that the flow of the magnetic flux flow is unstable in the magnetic gaps.

The inventors found out portions at which the flow of the magnetic flux flow was in good order, and further found that the flow of the magnetic flux flow can be controlled if variable magnetic gaps are made there. As a result, it becomes practicable to improve controllability of the output characteristic. Hereunder, this is described.

### (Structure and Operation of Axial gap Type Electric Motor according to a first embodiment)

Next, based upon the basic structure and the drive principle of the foregoing axial gap type electric motor, a structure and an operation of an axial gap type electric motor according to a first embodiment is described.

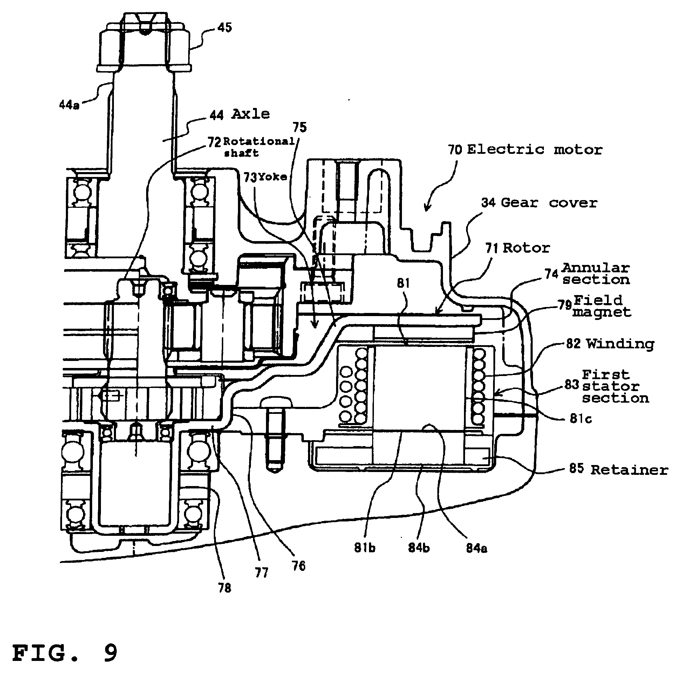

Fig. 9 is a cross sectional view, showing an axial gap type electric motor according to the first embodiment together with the structure around the rear end of the rear arm. Additionally, in Fig. 9, the same constructive portions as those shown in Fig. 2 are assigned with the same reference numerals and symbols as those used in Fig. 2.

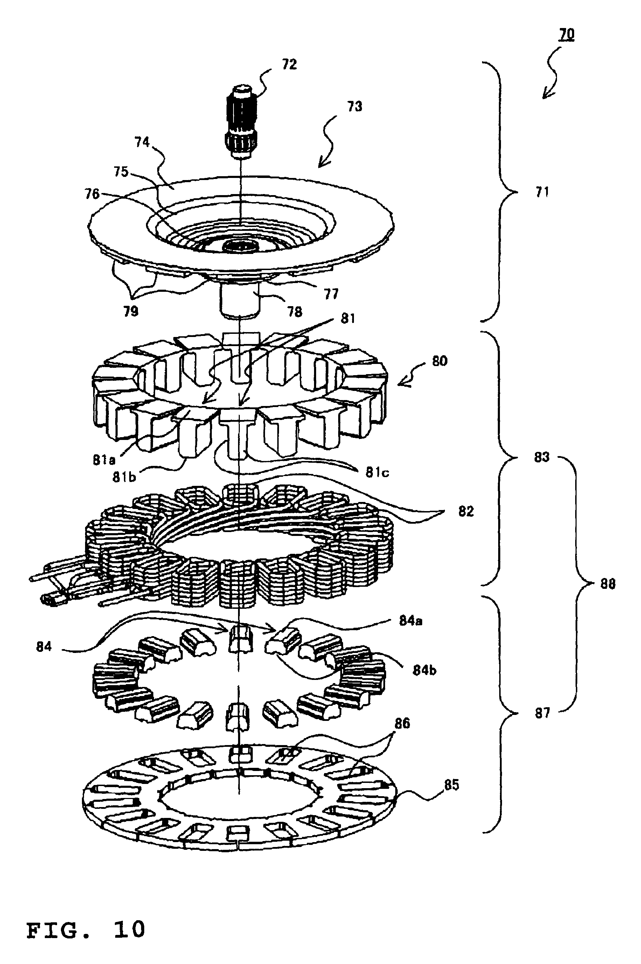

Fig. 10 is a perspective exploded view of the axial gap type electric motor according to the first embodiment. Hereunder, with reference to Figs. 9 and 10, the structure of the axial gap type electric motor (hereunder, simply called electric motor) of the present embodiment is described.

First, the electric motor 70 of the present embodiment has a rotor 71. The rotor 71 is constructed so as to rotate about an axis of a rotational shaft 72, like a disk. The rotor 71 has the same structure as the rotor 38 shown in the basic structure of Figs. 2 and 4.

That is, in Fig. 10, the rotor 71, the rotational shaft 72, a rotor side yoke 73, a annular section 74, a tapered section 75, a first cylindrical section 76, a annular section 77, a second cylindrical section 78, and field magnets 79 are the same as the rotor 38, the rotational shaft 41 e, the rotor side yoke 41, the annular section 41 a, the tapered section 41b, the first cylindrical section 41c, the annular section 41d, the second cylindrical section (rotational shaft) 43, and the field magnets 42, respectively, shown in Figs. 2 and 4.

A stator (stator section) 88 is disposed to oppose to the rotor 71 (more specifically, a surface where a plurality of field magnets 79 are disposed). The stator 88 is divided into two portions, a first stator section 83 and a second stator section 87.

The first stator section 83 includes a first stator core 80 having a plurality of first teeth 81 retained by a retainer (not shown). The first teeth 81 are disposed in such a manner that one end surface 81a of each first tooth 81 opposes to the rotor 71 in an axial direction. Each tooth 81 has a winding 82 wound around a circumferential side surface 81 c except for both end surfaces (81 a, 81 b).

In other words, a plurality of first teeth 81 are disposed opposed to the rotor 71 (more specifically, a side thereof on which a plurality of field magnets 79 are arranged) with their one end surfaces 81a oriented in the axial direction of the rotating shaft 72. Windings 82 are wound around circumferential side surfaces 81c, other than both end surfaces (81 a and 81 b), of the first teeth 81.

Additionally, the first teeth 81 is formed in such a manner that the end surface 81a of each tooth 81 opposing to the rotor 71 is larger than an opposite end surface 81 b. Thus, with regard to spaces between neighboring first teeth 81 and 81, one of the spaces existing between the end surfaces 81a opposing to the rotor 71 is made narrow, and the other space between the opposite surfaces 81 b is made broad.

Each first tooth 81 having the respective winding 82 is molded together with the winding 82 to form the respective first stator section 83 which whole configuration is circular. Additionally, a drive current control for generating torque that is applied to respective windings (coils) 82 of the first teeth 81 of the first stator section 83 is the current control that uses the same method as that described with reference to Fig. 5, i.e., the basic drive method that does not include the field magnet weakening control, and the torque of the electric motor is generated under the drive current control.

Also, the second stator section 87 itself forms a second stator core (87) with second teeth 84 which number is the same as the number of the first teeth 81 retained by a retainer 85.

Each second tooth 84 of the second stator section 87 has one end portion 84a that is positioned to oppose to the opposite end surface 81 b that oppositely exists relative to the end surface 81a of the first tooth 81 of the first stator section 83 that opposes to the rotor 71.

Another end 84b of each second tooth 84 is press-fitted into respective one of multiple tooth receiving openings 86 that are formed on the annular retainer 85 to be fixed.

The second teeth 84 and the retainer 85 having the second teeth 84 press-fitted and fixed to the tooth receiving openings 86 together form the second stator section 87. Also, preferably, the second teeth 84 and the retainer 85 are unitarily molded. Those are molded in this embodiment, accordingly. However, the mold is not shown in Fig. 10.

In other words, second teeth 84 in the same number as the first teeth 81 are disposed opposed to the end surfaces 81b of the first teeth 81, which are opposite the end surfaces 81a opposed to the rotor 71, of the first stator 83. The second teeth 84 are disposed with their one ends 84a opposed to the end surfaces 81 b of the first teeth 81.Another end 84b of each second tooth 84 is press-fitted into respective one of multiple tooth receiving openings 86 that are formed on the annular base 85 to be fixed.

The second teeth 84 and the retainer (base) 85 having the second teeth 84 press-fitted and fixed to the tooth receiving openings 86 together form the second stator section 87. Also, preferably, the second teeth 84 and the retainer (base) 85 are unitarily molded. Those are molded in this embodiment, accordingly. However, the mold is not shown in Fig. 10.

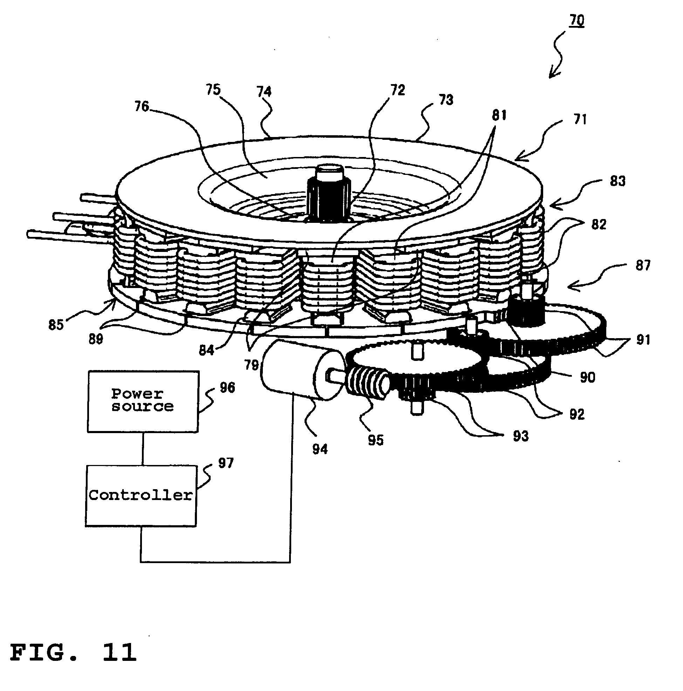

Fig. 11 is a perspective view, showing a condition under which the electric motor 70 having the structure described above is completely assembled, together with a rotation control system. Additionally, in Fig. 11, the same components as those shown in Fig. 10 are assigned with the same reference numerals as those used in Fig. 10. Also, the molds of the first stator section 83 and the second stator 87 are not shown in Fig. 11. Further, slits 89 which are omitted in Fig. 10 (see slits 59 of Fig. 4) are indicated in the retainer 85 of the second stator section 87 shown in Fig. 11.

As shown in Fig. 11, the rotor 71, the first stator section 83 and the second stator section 87 of the electric motor 70 shown in the exploded view of Fig. 10 are positioned in order along the rotational axis direction to be slightly spaced apart from one another.

The first stator section 83 is, as called such, fixed to the rear end 23a of the rear arm 23 shown in Fig. 2 by an engaging section formed at the molded portion, although not shown. To the contrary, the second stator section 87 is not completely fixed and can pivot somewhat relative to the first stator 83, which is described below.

As shown in Fig. 11, a pivot mechanism for the second stator section 87 is constructed in such a manner that a toothed portion for gear engagement 90 formed at a portion of a circumferential side surface of the retainer 85 of the second stator section 87 engages with a small diameter gear of speed reduction gears 91 of a rotation control system.

A large diameter gear of the speed reduction gears 91 engages with a small diameter gear of speed reduction gears 92 in the next stage, and a large diameter gear of the speed reduction gears 92 engages with a small diameter gear of speed reduction gears 93 in the third stage. A large diameter gear of the speed reduction gears 93 engages with a worm gear 95 fixedly attached to the tip of a rotational shaft of an electric motor 94.

The motor 94 is connected to a drive pulse voltage output terminal, which is not shown, of a controller 97 to which electric power for driving circuits is supplied from a power source 96. An axis of the rotation of the motor 94 in the right and reverse directions is changed to extend at right angles to its original direction by the worm gear 95. Also, the rotation is reduced in speed and is transmitted to the large diameter gear of the speed reduction gears 93. The rotation is reduced through three stages, corresponding to gear ratios between the reduction gears 93, 92 and 91 in order, and then transmitted to the toothed portion 90 for gear engagement that is formed on the retainer 85 of the second stator section 87.

Thereby, the second stator section 87 is constructed to be slightly movable in the rotational direction of the rotor 71 relative to the first stator section 83. That is, the second stator section 87 can continuously, intermittently and reciprocally move with a narrow pivot angle. In other words, the second stator section 87 can move steplessly, intermittently, and slightly in both the right and reverse directions along the rotational direction of the rotor 71.

Figs. 12(a), (b) and (c) are illustrations for describing the pivot angle and the operation of the reciprocal movement made by the second stator section 87 along the rotational direction of the rotor 71 relative to the first stator section 83. Additionally, in Figs. 12(a), (b) and (c), in order to simply show transitional conditions of the second teeth 84 of the second stator section 87 relative to the first teeth 81 of the first stator section 83, the windings 82, the slits 89 and the toothed portion 90 for gear engagement, the rotation control system etc. shown in Fig. 11 are omitted in the illustrations.

Fig. 12(a) shows a positional relationship of the second teeth 84 of the second stator section 87 relative to the first teeth 81 of the first stator section 83, occurring when the high torque low speed rotation is made. In this embodiment, the position in this positional relationship is the reference position.

With the pivotal movement of the second stator section 87 described above, the second teeth 84 can pivot (reciprocal movement) in a narrow angular range along the rotational direction of the rotor 71 indicated by the arrow "a," from the reference position shown in Fig. 12(a), i.e., a position at which each second tooth 84 right opposes to the respective first tooth 81, to the maximum movable position shown in Fig. 12(c), i.e., a right center position between the respective first teeth 81 and 81, by way of a midway position shown in Fig. 12(b). Additionally, the midway position shown in Fig. 12(b) is a certain and any position in the stepless and intermittent pivotal movement.

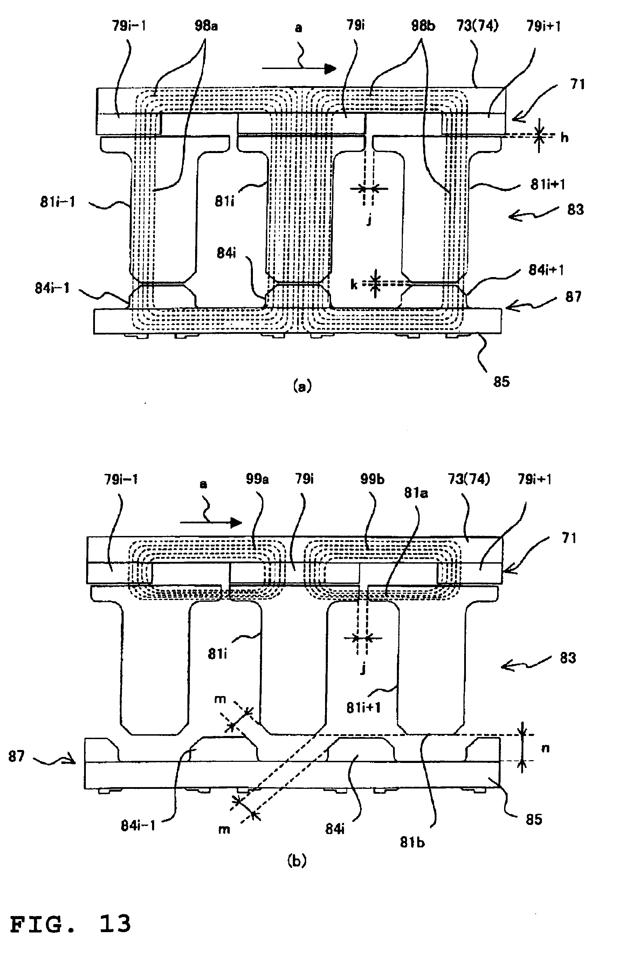

Figs. 13(a) and (b) are illustrations for describing the principle of the rotation control of the electric motor 70 in this embodiment made in a range from a high torque low speed rotation to a low torque high speed rotation.

Additionally, in order to simply show, the windings 82 wound around the respective teeth 81 and the mold are omitted in Figs. 13(a) and (b). Similarly, the mold of the second teeth 84 and the retainer 84 is omitted in the illustrations.

Also, Fig. 13(a) shows the high torque low speed rotational condition shown in Fig. 12(a) under which each second tooth 84 right opposes to the respective first tooth 81. Fig. 13(b) shows the low torque high speed rotational condition shown in Fig. 12(c) under which each second tooth 84 exists at the right center position between the respective first teeth 81 and 81.

Also, Fig. 13(a) shows a condition under which the i^{th} magnet 79i of the rotor 71 right opposes to the i^{th} first tooth 81 i of the first stator 83 on the stator side, and the i^{th} second tooth 84i of the second stator section 87 on the stator side right opposes to the first tooth 81i. That is, Fig. 13(a) shows the same condition as that shown in Fig. 12(a).

Further, Fig. 13(b) shows a condition under which the positional relationship between the magnet 79i of the rotor 71 and the first tooth 81 i of the first stator section 83 is not changed, and the second tooth 84i of the second stator section 87 is placed at the right center position between the respective first teeth 81i and 81i+1 of the first stator section 83. That is, Fig. 13(b) shows the same condition as that shown in Fig. 12(c).

In Fig. 13(a), the annular section 74 of the rotor side yoke 73, the first teeth 81 (81i-1, 81i, 81i+1) of the first stator section 83, the second teeth 84 (84i-1, 84i, 84i+1) of the second stator section 87 and the retainer 85 all belonging to the rotor 71 have strong permeability. Also, the opposing surfaces of the magnets 79 (79i-1, 79i, 79i+1) and the first teeth 81, and the opposing surfaces of the first teeth 81 and the second teeth 84 are extremely close to each other, respectively. Thus, a magnetic reluctance "h" between the opposing surfaces of the magnets 79 (79i-1, 79i, 79i+1) and the first teeth 81, and a magnetic reluctance "k" between the opposing surfaces of the first teeth 81 and the second teeth 84 are small.

Additionally, as described above, the end surface 81a of each first tooth 81 opposing to the rotor 71 is formed to be larger than the other end surface 81b thereof. Thus, between the respective neighboring first teeth 81, a magnetic reluctance "j" is made between the end surfaces 81a opposing to the rotor 71 extremely smaller than a magnetic reluctance made between the other surfaces; however, this "j" is larger than the magnetic reluctance "h" with the rotor 71. That is, there is a relationship (h □ k < j) among the magnetic reluctances.

Thus, the magnetic fluxes generated between the magnet 79i (decided to be N pole) and the neighboring magnet 79i-1 (S pole, accordingly) hardly permeates through the portions having the magnetic reluctance "j," and form a strong magnetic flux flow 98a that permeates through the portions having the magnetic reluctance "h," the first tooth 81 i, the portions having the magnetic reluctance "k," the second tooth 84i, the retainer 85, the second tooth 84i-1, the retainer 85, the portions having the magnetic reluctance "k," the first tooth 81i-1, the portions having the magnetic reluctance "h," and the annular section 74.

Further, the magnetic fluxes generated between the magnet 79i (N pole) and the other neighboring magnet 79i+1 (S pole) hardly permeates through the portions having the magnetic reluctance "j," and form a strong magnetic flux flow 98b that permeates through the portions having the magnetic reluctance "h," the first tooth 81i, the portions having the magnetic reluctance "k," the second tooth 84i, the retainer 85, the second tooth 84i+1, the retainer 85, the portions having the magnetic reluctance "k," the first tooth 81i+1, the portions having the magnetic reluctance "h," and the annular section 74.

These phenomena occur even though the magnet 79i is not the N pole magnet but the S pole magnet except that the magnetic fluxes go in the reverse direction, and similarly a strong magnetic flux flow is made that flows through the associated magnet 79, first tooth 81, second tooth 84, retainer 85 and annular section 74.

It is described above that the strong magnetic fluxes cause the magnetic reluctance that can soon bring in the limit against the transition of the electric motor 70 to the low torque high speed rotation from the high torque low speed rotation without taking any measure. Also, it is described above that there is the field magnet weakening control to make the limit come late.

However, in the present embodiment, as shown in Fig. 11 and Figs. 12(a), (b) and (c), the second teeth 84 can pivot (reciprocal movement) in the narrow angular range along the rotational direction of the rotor 71 indicated by the arrow "a" from the reference position at which each second tooth 84 right opposes to the respective first tooth 81 to the maximum movable position located at the right center position between the respective first teeth 81 and 81.

Now, suppose that the second teeth 84 pivot to the maximum movable position shown in Fig. 13(b) from the reference position shown in Fig. 13(a). On this occasion, a magnetic reluctance "m," which is larger than the magnetic reluctance "k" under the right opposing condition, is made between the opposing surfaces of each first tooth 81 and the respective second tooth 84. Further, because each second tooth 84 is positioned in the configuration to project from the retainer 85, a magnetic reluctance "n," which is larger than the magnetic reluctance "m" made with the second tooth 84, is made.

That is, there is a relationship "m < N" therebetween. The magnetic reluctance "n" is negligible compared with the magnetic reluctance "m." Thus, under the condition shown in Fig. 13(b), it is almost true that the magnetic reluctance made between each second tooth and the opposite end surface 81 b of the respective first tooth oppositely positioned relative to the end surface 81 a opposing to the rotor 71 is "m," when the second tooth 84 moves to the right center position between each first tooth 81 and the other neighboring first tooth 81.

As described above, the end surface 81 a of each first tooth 81 opposing to the rotor 71 is formed to be larger than the other end surface 81 b thereof. Thus, between the respective neighboring first teeth 81, the magnetic reluctance "j" made between the end surfaces 81 a opposing to the rotor 71 extremely small, and under the condition shown in Fig. 13(b), the relationship (j < 2m) is made between the magnetic reluctance "j" and the magnetic reluctance "m."

That is, it is true that a distance (magnetic reluctance "j") defined between the end surface 81 a of each first tooth 81 opposing to the rotor 71 and the end surface 81 a of the other neighboring first tooth 81 is smaller than the minimum distance (magnetic reluctance "m") defined between each second tooth and the opposite end surface 81b oppositely positioned relative to the end surface 81 a of the first tooth opposing to the rotor 71.

By being brought into this condition, i.e., the condition under which the relationship among the magnetic reluctances of the respective members is h < j < m < N is brought, as shown in Fig. 13(b), the magnetic fluxes made between the magnet 79i (N pole) and the other neighboring magnet 79i-1 (S pole) form a weak magnetic flux flow 99a that does not flow to the second tooth 84i-1 or to the retainer 85 from the first tooth 81 i, due to the magnetic reluctance "m" and the magnetic reluctance "n," but permeates through the first tooth 81 i, the portions having the magnetic reluctance "j," the first tooth 81 i-1 and the annular section 74.

Also, the magnetic fluxes made between the magnet 79i (N pole) and the other neighboring magnet 79i+1 (S pole) form a weak magnetic flux flow 99a that does not flow to the second tooth 84i+1 or to the retainer 85 from the first tooth 81 i, due to the magnetic reluctance "m" and the magnetic reluctance "n," but permeates through the first tooth 81 i, the portions having the magnetic reluctance "j," the first tooth 81i+1, and the annular section 74.

Thus, the magnetic fluxes from the magnets 79 do not cross the windings 82, which is not shown, of the respective first teeth 81, and the magnetic reluctances against the rotation of the rotor 71 in its rotational direction, generated by these magnetic fluxes crossing the windings 82, disappear. The rotor can rotate in a high speed, accordingly.

Also, similarly, the magnetic fluxes from the magnets 79 do not flow into the windings of the respective first teeth 81. Thus, the torque to be generated between the electrified first teeth 81 and the magnets 79 and then given to the rotor 71 is lowered. That is, the low torque high speed operation is realized.

As thus described, simply, the second teeth reciprocally move between the position at which the second teeth right oppose to the first teeth and the other position at which the second teeth are placed midway to the neighboring first teeth. The entire structure thus can be compact.

Now, a space making the magnetic reluctance, i.e., a gap ("j,""k,""m,""n" and so on) that causes the magnetic reluctances is described. The gap that causes the magnetic reluctance is defined as a magnetic reluctance space of air or the equivalent. The gap that causes the magnetic reluctance (hereunder, simply called gap) is further described.

According to an experiment, when the speed of the motorcycle during high-torque low-speed rotation as shown in Fig. 13(a) was 20 km/h, the speed of the motorcycle during low-torque high-speed rotation as shown in Fig. 13(b) was 60 km/h. That is, the rotational output during low-torque high-speed rotation was three times greater than that during high-torque low-speed rotation.

As described with Figs. 12(a), (b) and (c), since the second teeth 84 can be continuously moved with respect to the first teeth 81, the rotational output can be continuously changed during the transition from high-torque low-speed rotation to low-torque high-speed rotation.

In general, too strong magnets cannot be provided on the rotor when field magnet weakening control is employed. This is because when strong magnets are used, a large amount of electricity which does not directly contribute to rotation is consumed to apply a high current to the coils for field magnet weakening control.

In this embodiment, however, even if strong magnets are used, electricity which does not contribute to rotation is not consumed for field magnet weakening control since field magnet weakening control is not employed for the control of rotation. Thus, strong magnets can be used without taking the consumption of electricity into consideration, so that a large torque can be generated in the driving wheel when the electromotive two-wheeled vehicle is stated or climbing a hill.

As has been described previously, in the rotary electrical machine of this embodiment, the magnetic fluxes from the field magnets on the rotor flowing through the first teeth can be easily increased or decreased to change the rotational output characteristics by moving the second stator in the rotating direction of the rotor with respect to the first stator. When the rotary electrical machine is used as, for example, a rotary electrical machine for a gasoline vehicle which can be used as a starter motor and a generator for use during running, the magnetic fluxes from the rotor can be so controlled that a current can be generated in accordance with the amount of electricity which the battery can store per unit time easily.

Thus, since a generation loss caused by generating a current greater than the amount of electricity which the battery can store per unit time and discharging the excessive current can be avoided, an excessively large load is not applied to the engine and the gasoline vehicle can run with high efficiency.

### (Configuration and operation of a radial gap electric motor according to a further embodiment)

Although not specifically illustrated, a radial gap type rotary electrical machine according to this further embodiment has a cylindrical rotor rotatable in a cylinder-like manner about a rotating shaft and a cylindrical first stator provided with a plurality of first teeth arranged inside the cylindrical bore of the rotor with their one end surfaces opposed to the rotor and provided with windings wound around their circumferential side surfaces except for both end surfaces.

A plurality of second teeth (in the same number as the first teeth) are arranged with their one ends opposed to the end surfaces of the first teeth of the first stator opposite the end surfaces thereof opposed to the rotor.

The other ends of the second teeth are fixedly inserted into a plurality of tooth receiving openings formed through a cylindrical base to form a second stator.

The second stator is reciprocable in the rotating direction of the rotor with respect to the first stator. The range within which the second stator is reciprocable with respect to the first stator, that is, the range within which the second teeth are reciprocable with respect to the first teeth is the same as that described with Figs. 12(a), (b) and (c), and the rotating motion and the control of the rotating speed of the radial gap rotating type electric machine of this embodiment provided by the movement of the second stator are the same as those described with Figs. 13(a) and (b).

### (Configuration and operation of a radial gap electric motor according to still another embodiment)

Although not specifically illustrated, a radial gap type rotary electrical machine according to this embodiment has a cylindrical first stator disposed radially outside a columnar rotor rotatable in a column-like manner about a rotating shaft with its one end surface opposed to the rotor.

The first stator has a plurality of first teeth provided with windings wound around their circumferential side surfaces except for both end surfaces.

A plurality of second teeth (in the same number as the firs teeth) are arrange with their one ends opposed to the end surfaces of the first teeth of the first stator opposite the end surfaces thereof opposed to the rotor. The other ends of the second teeth are fixedly inserted into a plurality of tooth receiving openings formed through a cylindrical base to form a second stator.

The second stator is reciprocable in the rotating direction of the rotor with respect to the first stator. The range within which the second stator is reciprocable with respect to the first stator, that is, the range within which the second teeth are reciprocable with respect to the first teeth, is the same as that described with Figs. 12(a), (b) and (c), and the rotating motion and the control of the rotating speed of the radial gap type rotary electrical machine of this embodiment provided by the movement of the second stator are the same as those described with Figs. 13(a) and (b).

The rotary electrical machine according to the present embodiments can be suitably used as a driving electric motor for an electric vehicle in which one rotary electrical machine has to cover a large operation range from high-torque low-speed rotation to low-torque high-speed rotation with a high efficiency, a rotary electrical machine for a gasoline vehicle which can be used as a starter motor and a generator for use during running, and a generator for use in a wind power generation system with a windmill rotatable by weak wind.

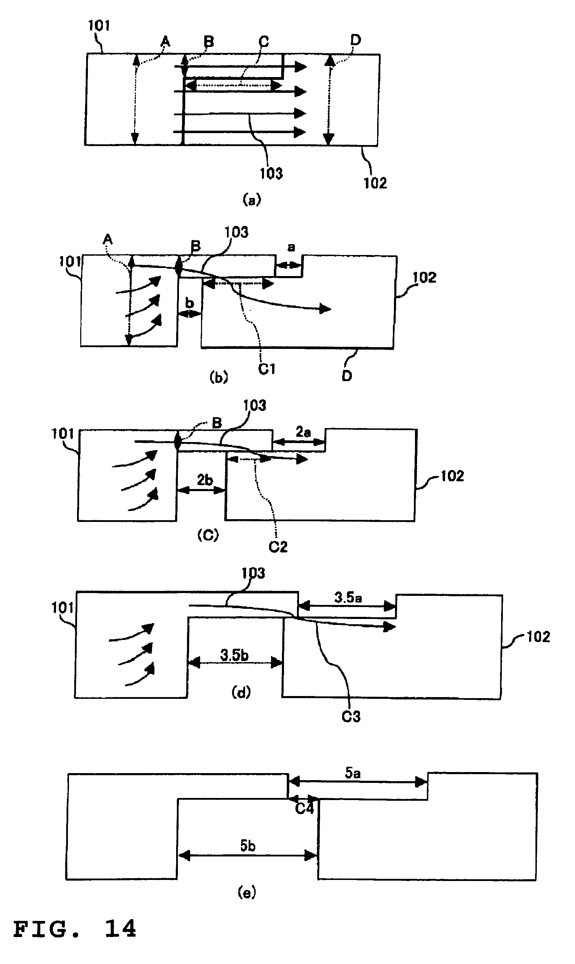

Figs. 14(a) to (e) are illustrations for describing differences between a contact area which varies a magnetic reluctance between two members and a gap. Generally, it is known that, when a magnetic flux flow coming from a magnet is going to flow between the two members made of a magnetic material, if any portion is ensured to be a flow route for the magnetic fluxes, the magnet does not provide any surplus magnetic fluxes.

When the two members are completely separated by a gap, the magnet tries to make the magnetic fluxes flow by any means, and the magnetic fluxes start to flow from a portion that gives the easiest route, i.e., from the narrowest gap.

Fig. 14(a) shows a condition under which two magnetic members 101 and 102 configured as the letter L in their cross sections are tightly coupled with each other. A vertical cross section of the major portion of the magnetic member 101 has an area A, while a vertical cross section of a projection of the magnetic member 101 has an area B. Also, a vertical cross section of the major portion of the magnetic member 102 has an area D, while a vertical cross section of a projection of the magnetic member 102 has an area D-B. A horizontal cross section of the respective projections has an area C, which is the same as one another.

Now, the following conditions are given: area A = area D = area C = 200S, and area B = 50S. Also, it is decided that magnetic fluxes 103 coming from a magnet out of the illustration flow to the magnetic member 102 from the magnetic member 101.

Suppose that, as shown in Fig. 14(b), the two magnetic members 101 and 102 move to be relatively separated from one another by the respective distances a and b (a = b) at the area B portion of the vertical cross section and the area D-B portion of the vertical cross section while the area C portions of the horizontal surfaces are in slide contact with each other.

Upon this movement, because a space of the distance b is made between the two magnetic members 101 and 102, the magnetic flux flow flowing into the major portion of the magnetic member 101 having the area A=200S becomes saturated at the area B portion, and reduces to the magnetic flux flow that flows through the area B=50S. This magnetic flux flow 103 flows into the magnetic member 102 via the sliding surfaces C1 (area C1 = 150S, B < C1).

Next, suppose that, as shown in Fig. 14(c), the two magnetic members 101 and 102 further move to be relatively separated from one another by the respective distances 2a and 2b at the area B portion of the vertical cross section and the area D-B portion of the vertical cross section while the area C portions of the horizontal surface are in slide contact with each other.

In this situation, the magnetic flux flow becoming saturated at the area B portion also reduces to the magnetic flux flow that flows through the area B=50S, and flows into the magnetic member 102 via the sliding surfaces C2 (area C2 = 100S, B < C2).

That is, no magnetic reluctance changes between conditions of Fig. 14(b) and Fig. 14(c). Specifically, the spaces that separate the two magnetic members 101 and 102 by the distances a, b or 2a, 2b in the magnetic flux direction are not spaces for causing the magnetic reluctance, because the magnetic reluctance does not change (is not varied), even though the distances change. Namely, the spaces are not gaps.

Further, suppose that, as shown in Fig. 14(d), the two magnetic members 101 and 102 further move to be relatively separated from one another by the respective distances 3.5a and 3.5b at the area B portion of the vertical cross section and the area D-B portion of the vertical cross section while the area C portions of the horizontal surface are in slide contact with each other.

On this occasion, each area C portion of the respective horizontal surface has a sliding surface area C3=25S. That is, the following relationship is given: B > C3. Thus, the magnetic flux flow 103 is saturated at the sliding surface C3, and the magnetic flux flow corresponding to the area 25S flows into the magnetic member 102.

That is, the magnetic reluctance between the two magnetic members 101 and 102 changes for the first time when the area of the sliding surface C becomes smaller than the area B of the vertical cross section of the projection of the magnetic member 101. In other words, the magnetic reluctance changes depending on the change of each area of the sliding surfaces between the two members.

The change of the magnetic reluctance shown in Figs. 14(c) and (d) is not caused by the changes of the separating distances between the two members (the changes 2a and 2b to 3.5a and 3.5b), but by the change of the area of the sliding surface C (the change of C2 to C3). Namely, the separating distances 3.5a and 3.5b that have changed still do not cause the gaps.

Also, Fig. 14(e) shows a condition under which the two magnetic members 101 and 102 are relatively separated from one another by the respective distances 5a and 5b at the area B portion of the vertical cross section and the area D-B portion of the vertical cross section so that the sliding surfaces C3 are completely released from the abutting function to be separated by the distance C4.

As described above, when the two members are completely separated by a gap, the magnetic flux flow of the magnet flows through a portion that gives the easiest route, i.e., through a portion having the narrowest distance C4. Namely, the magnetic reluctance is generated at the portion having the distance C4, and the distance C4 is a magnetic reluctance gap. That is, the magnetic reluctance varies in accordance with the change of the distance C4.

In other words, the distance C4 is a gap to vary the magnetic reluctance; however, the distances 5a and 5b are not spaces to vary the magnetic reluctance, i.e., those are not gaps. Any portion that is described as a gap in this embodiment is the portion that defines the distance C4 discussed above.

In the present embodiment, as thus described, the stator is divided into at least two portions, and one portion is moved at right angles to the rotational direction of the rotor, i.e., to the direction of the magnetic flux flow that flows into each core around which the respective winding is wound from the rotor to form the variable gaps, to thereby greatly change the output characteristic of the rotary electrical machine without consuming the electric power that does not contribute to the torque.

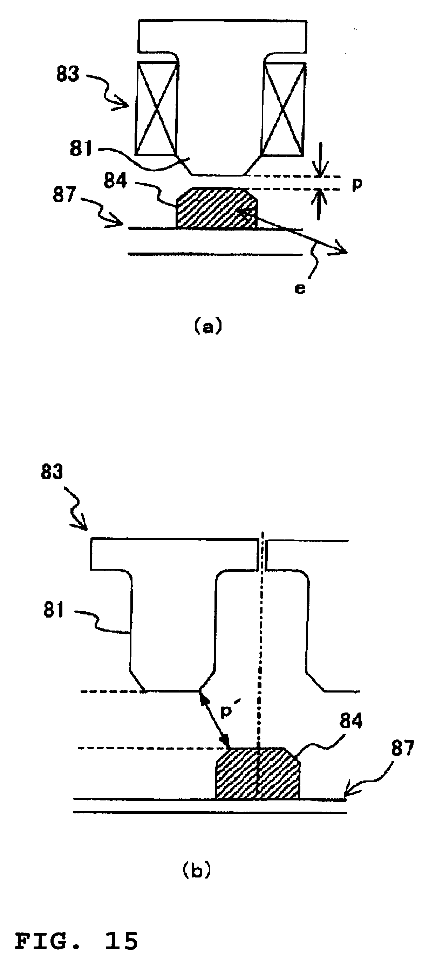

Figs. 15(a) and (b) show a structure of the major part of an alternative (first one) of the axial gap type electric motor in the above embodiments, in particular in the above first embodiment.

Fig. 15(a) shows a condition that is the same as the condition shown in Fig. 13(a), under which each first tooth 83 of the first stator section 83 right opposes to the respective second tooth 84 of the second stator section 87. From this condition, each second tooth 84 in this embodiment obliquely moves downward to be separated from the respective first tooth 81 as indicated by the two-headed arrow "e" of the illustration.

That is, as shown in Fig. 15(b), the second stator section 87 moves in a direction parallel to the rotational direction of the rotor 71 that exists out of the illustration and also moves in a direction perpendicular to the rotational direction of the rotor 71.

Thus, a distance, between each first tooth 81 of the first stator section and the respective second tooth 84 of the second stator section 87 and in the direction perpendicular to the rotational direction of the rotor 71, changes from a distance "p" shown in Fig. 15(a) to a distance "p"' shown in Fig. 15 (b) (p' > p).

That is, a magnetic reluctance gap between each first tooth 83 and each second tooth 84 is larger than that in the structure shown in Fig. 13(b). Therefore, the output characteristic of the electric motor can vary on a larger scale.

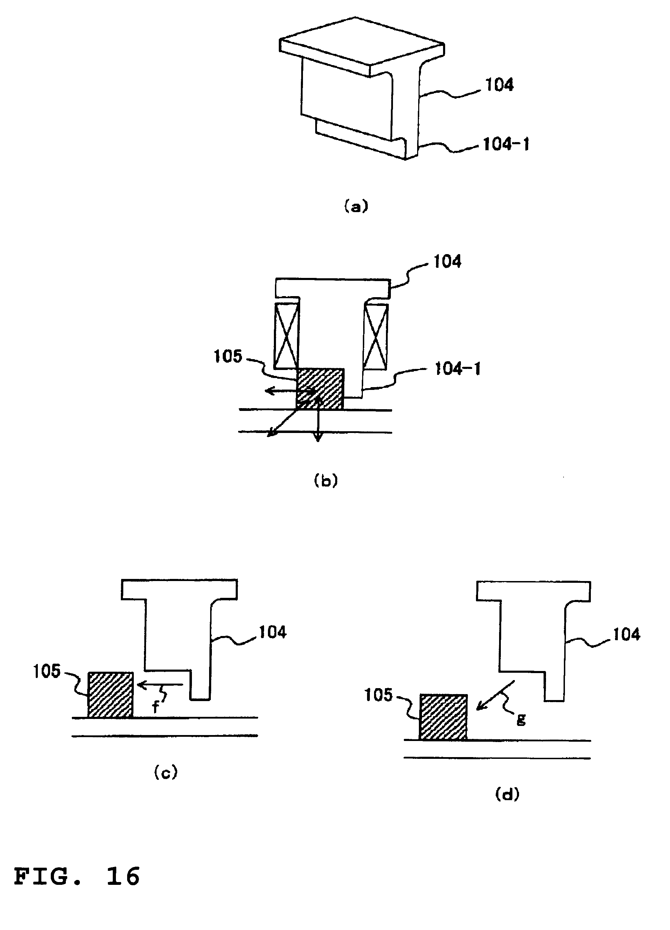

Figs. 16(a) to (d) show a structure of the major part of another alternative (second one) of the axial gap type electric motor in the above embodiments, in particular in the above first embodiment.

As shown in Figs. 16(a) and (b), each first tooth 104 has a protruding portion 104-1 abutting on a side surface of the respective second tooth 105 at an end surface that opposes to one end surface of the second tooth 105.

Each first tooth 104 therefore prohibits the respective second teeth 105 from moving rightward beyond the right opposing positions shown in Fig. 16 (b).

In this embodiment, also each second tooth 105 not only moves in the direction parallel to the rotational direction of the rotor 71 that exists out of the illustration but also moves in the direction perpendicular to the rotational direction of the rotor 71. That is, each second tooth 105 obliquely moves downward to be separated from the respective first tooth 81.

Fig. 16(c) shows an alternative in which each second tooth 105 moves horizontally as indicated by the arrow "f," while Fig. 16(d) shows another alternative in which each second tooth 105 obliquely moves downward as indicated by the arrow "g."

In this alternative, also a magnetic reluctance gap between each first tooth 104 and each second tooth 105 is larger than that in the structure shown in Fig. 13(b). Therefore, the output characteristic of the electric motor can vary on a larger scale.

### (Structure and operation of axial gap type electric motor according to a further embodiment)

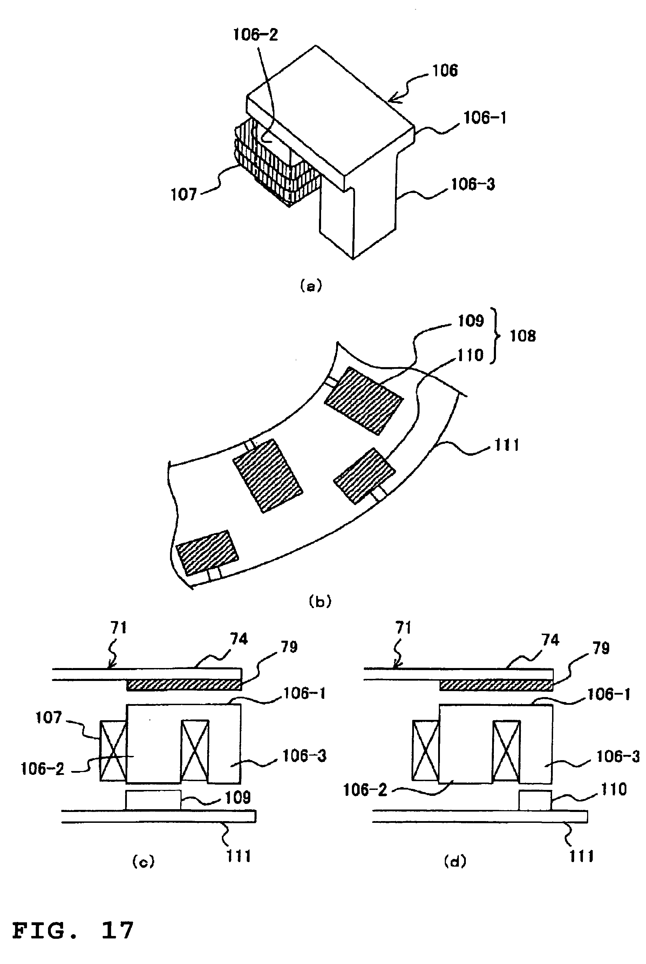

Figs. 17(a) to (d) show a structure of the major part of an axial gap type electric motor in the further embodiment (in the following indicated as: "second" embodiment).

As shown in Figs. 17(a) and (c), each first tooth 106 in this second embodiment is formed in such a manner that a portion lower than an end portion 106-1 facing the annular section 74 of the rotor 71 includes a winding-possessing-portion 106-2 having a winding 107 positioned around it and a non-winding-possessing portion 106-3 having no winding positioned around it.

In this connection, as shown in Figs. 17(b) and (c), each second tooth 108 is divided into an inner tooth portion 109 corresponding to the winding-possessing-portion 106-2 of the respective first tooth 106 and an outer tooth portion 110 corresponding to the non-winding-possessing-portion 106-3 of the each first tooth 110.

The inner tooth portion 109 of each second tooth 108 is placed at an inner side (side close to the center axis) of the annular retainer 111, while the outer tooth portion 110 is placed at an outer side of the retainer 111 and at a middle position between two neighboring tooth portions 109.

A condition shown in Fig. 17(c) is the same as the condition shown in Fig. 13(a), because the winding-possessing-portion 106-2 of each first tooth 106 and the inner tooth portion 109 of each second tooth 108 right oppose to each other. Also, because the non-winding-possessing-portion 106-3 and the outer tooth portion 110 are placed at the outer side of the circular arrangement and are alternately positioned, the magnetic gap is extremely large, and they nearly do not affect the magnetic flux flow.

To the contrary, a condition shown in Fig. 17(d) is the same as the condition shown in Fig. 13(b) regarding a positioning relationship between the winding-possessing-portion 106-2 of each first tooth 106 and the inner tooth portion 109 of each second tooth 108a. Each non-winding-possessing portion 106-3 and the respective outer tooth portion 110 right oppose to each other.

That is, the magnetic fluxes of each field magnet 79 reflux through the respective non-winding-possessing portion 106-3 and outer tooth portion 110 and the retainer 111, and nearly do not flow through the winding-possessing-portion 106-2 of each first tooth 106. Namely, the magnetic fluxes of each winding-possessing-portion 106-2 can be shut off stronger than the embodiment shown in Fig. 13(b).

Additionally, in the above embodiments (in particular in the above first and second embodiments), the opposing surfaces of the rotor and the stator, and the opposing surfaces of the stator sections, which are the two portions of the divided stator, are arranged to extend parallel to (horizontally in the illustrations) the rotational surface of the rotor; however, the opposing surfaces of those components are not limited to such parallel arrangement.

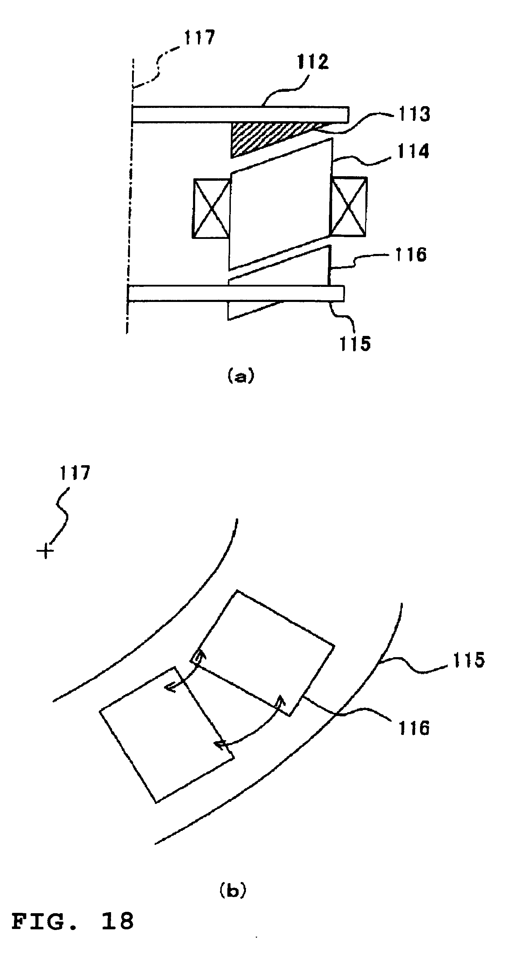

Figs. 18(a) and (b) show a further alternative wherein the opposing surfaces of the rotor and the stator, and the opposing surfaces of the stator sections, which are the two portions of the divided stator, extend slantwise.

In the alternative shown in Figs. 18(a) and (b), the respective opposing surfaces of the field magnets 113 retained by the retainer 112, the first teeth 114, and the second teeth 116 retained by the retainer 115 extend upward outward relative to the center 117 of the rotor 112 in its radial direction. With this alternative structure, the same actions and effects can be obtained as those in the above embodiments (in particular in the above first and second embodiments).

### (Structure of radial gap type electric motor according to still another embodiment, in the following indicated as: "third" embodiment)

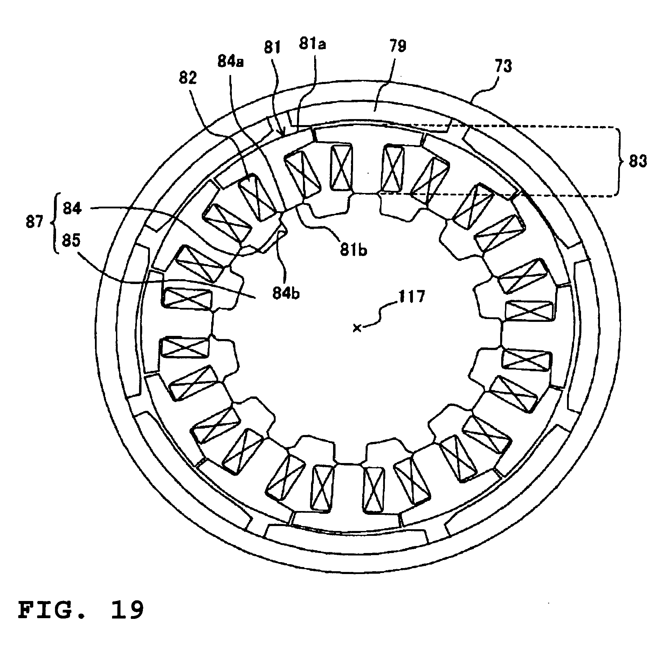

Fig. 19 is a cross sectional view, showing a structure of a radial gap type electric motor according to this third embodiment.

Additionally, in the illustration, in order to simply show this embodiment in comparison with the above embodiment (in particular with the above first and second embodiments), components having the same functions are assigned with the same reference numerals as those assigned in Fig. 10.

As shown in the illustration, this radial gap type electric motor includes a cylindrical rotor 73 rotating about an axis of a rotational shaft (indicated by a rotational center 117 in the illustration), and a first stator core 83 positioned inside of the cylindrical rotor 73 and having a plurality of first teeth 81 respective one end surfaces of which oppose to the rotor 73 and a winding 82 is wound around a circumferential side surface of each first tooth 81 except for both the end surfaces 81 a and 81 b.

The electric motor further includes a second stator core 87 having a plurality of second teeth 84. Each second tooth 84 has one end surface 84a positioned to oppose to the one end surface of the first tooth 81 that oppositely exists relative to the other end surface opposite the rotor 73. The second tooth has also the other end surface 84b retained in a retainer 85.

In this radial gap type electric motor, the second stator core 87 moves at right angles to a direction of flow of magnetic fluxes that are generated, when the magnetic windings 82 of the first stator core 83 are electrified, to permeate through the respective first teeth 81, i.e., clockwise or counterclockwise in the illustration. Therefore, the same field magnet control as that described with reference to Figs. 13(a) and (b) can be practicable.

### (Structure of radial gap type electric motor according to yet another embodiment, in the following indicated as: "fourth" embodiment)

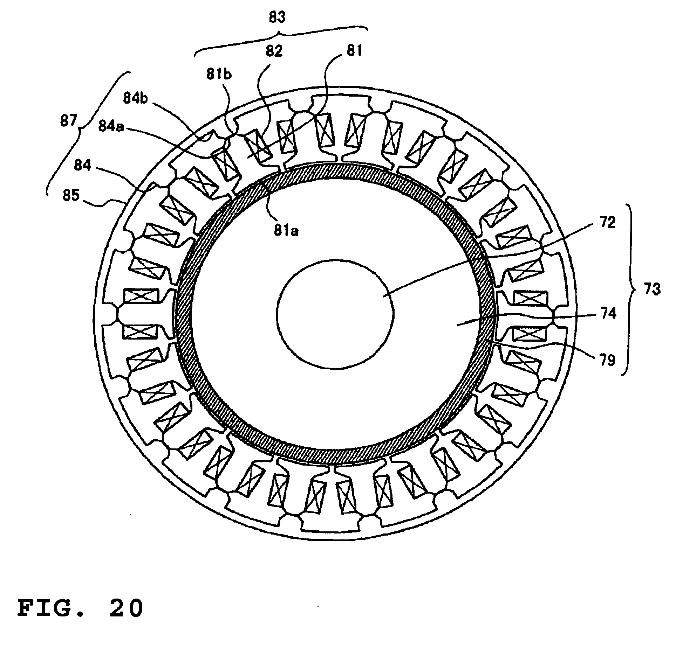

Fig. 20 is a cross sectional view, showing a structure of a radial gap type electric motor according to this fourth embodiment.

Additionally, also in the illustration, in order to simply show this fourth embodiment in comparison with the above first embodiment, components having the same functions are assigned with the same reference numerals and symbols as those assigned in Fig. 10.

As shown in the illustration, this radial gap type electric motor includes a columnar or cylindrical rotor 73 rotating about a rotational shaft 72, and a first stator core 83 positioned outside of the rotor 73 in its radial direction and having a plurality of first teeth 81 respective one end surfaces of which oppose to the rotor 73 and a winding is wound around a circumferential side surface of each first tooth 81 except for both the end surfaces 81a and 81 b.

The electric motor further includes a second stator core 87 having a plurality of second teeth 84. Each second tooth 84 has one end surface 84a positioned to oppose to the one end surface 81 b of the first tooth 81 that oppositely exists relative to the other end surface 81 a opposite the rotor 73. The second tooth has also the other end surface 84b retained in a retainer 85.

In this radial gap type electric motor, the second stator core 87 moves at right angles to a direction of flow of magnetic fluxes that are generated when the magnetic windings 82 of the first stator core 83 are supplied with the electric power and permeates through the respective first teeth 81, i.e., clockwise or counterclockwise in the illustration. Thus, the same field magnet control as that described with reference to Figs. 13(a) and (b) can be practicable.

### (Structure of axial gap type electric motor according to yet another embodiment, in the following indicated as: "fifth" embodiment)

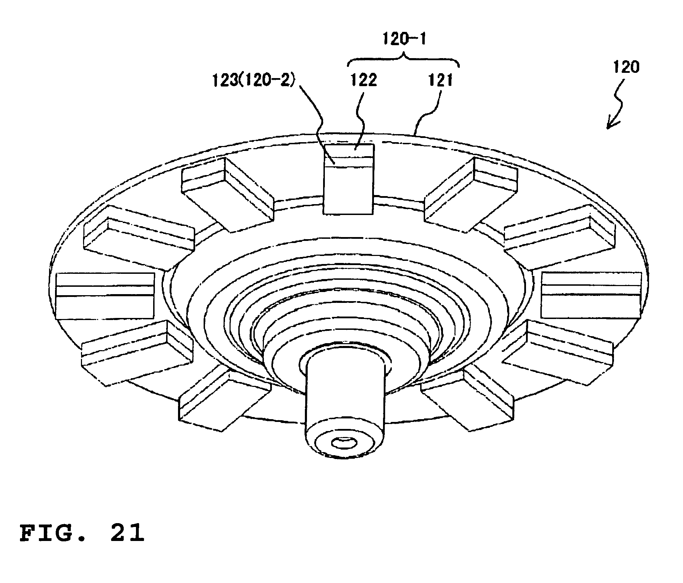

Fig. 21 is a perspective view, showing the major part of an axial gap type electric motor according to this fifth embodiment.

This illustration only shows a rotor of the axial gap type electric motor of this embodiment.

As shown in Fig. 21, first, the rotor 120 of this embodiment includes a plurality of field magnets 122 fixedly positioned on a annular section 121 of a rotor yoke of a first rotor section 120-1.

Next, the rotor 120 includes a second rotor section 120-2 constructed in such a manner that magnetic members 123 which number is the same as the number of the field magnets 122 are disposed on a rotary retainer which is not shown to nearly slidably contact with a rotational surface of each filed magnet 122, and the second rotor section 120-2 coaxially engages with the first rotor section 120-1 and rotates together with the first rotor section 120-1.

A stator that is positioned to oppose to the rotor 120 has the same structure as that of the stator 39 shown in Figs. 3 and 4.

In this axial gap type electric motor of this embodiment, when it makes a low speed high torque rotation, as shown in Fig. 21, the first rotor section 120-1 and the second rotor section 120-2 are positioned in such a manner that the respective field magnets 122 and the magnetic members 123 entirely overlap with each other to rotate in phase.

Thereby, magnetic fluxes of the field magnets 122 are controlled to gather in the respective magnetic members 123 and then flow into teeth of the stator.

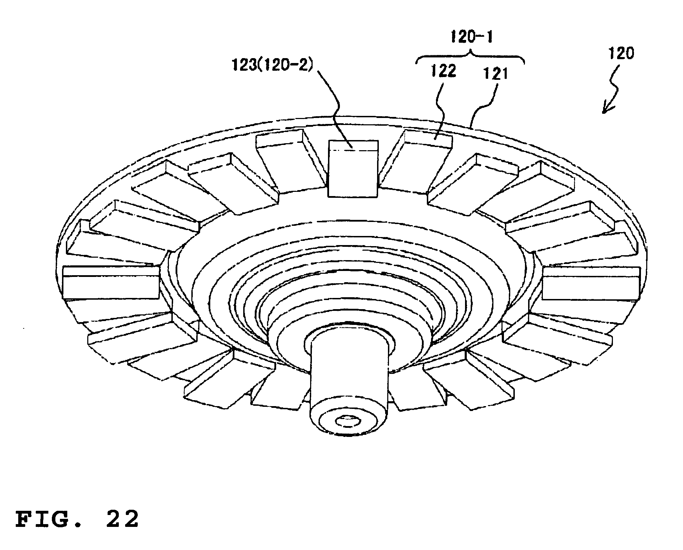

Fig. 22 is an illustration, showing a relationship of displacement of the rotational phase between the first rotor section 120-1 and the second rotor section 120-2 when the rotor 120 makes a high speed low torque rotation in the structure. Fig. 22 shows a condition under which the displacement of the rotational phase between the first rotor section 120-1 and the second rotor section 120-2 is the maximum.

The first rotor section 120-1 and the second rotor section 120-2 can move relative to each other between the condition under which the phases are consistent with one another as shown in Fig. 21 and the condition under which the phases are displaced within 15 degrees from one another as shown in Fig. 22.

Under the condition that the phases are displaced with 15 degrees as shown in Fig. 22, a magnetic gap between each field magnet 122 and the respective magnetic member 123 becomes extremely large at large portions in a width direction of the rotational shaft, except for a relatively small gap partially formed at end portions located close to the rotational center. Thus, almost the entire magnetic flux flow of each field magnet 122 flow through the neighboring field magnet 122 via the annular section 121 to reflux.

The magnetic flux flow that flows into the magnetic member 123 through the small gap formed at the portions close to the rotational center is an extremely small portion of the entire magnetic flux flow. Also, the magnetic gap between each magnetic member 123 and the respective tooth of the stator becomes extremely large at large portions in the width direction of the rotational shaft, except for a relatively small gap partially formed at end portions located close to the rotational center.

Thus, the magnetic flux flow that slightly flows into each magnetic member 123 from the respective field magnets 122 does not flow through the tooth of the stator. Thereby, the drive condition during the high speed low torque rotation can be realized.

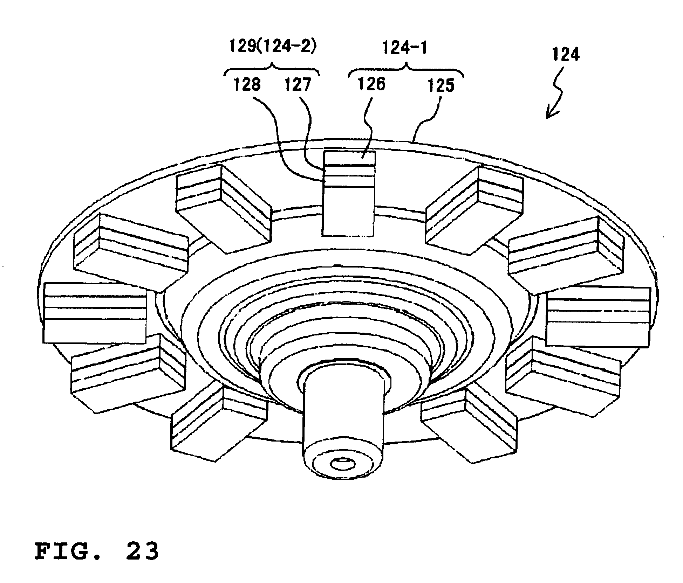

In other words, by suitably positioning the first rotor section and the second rotor section to control the displacement of the rotational phase from the state shown in Fig. 22 to the state shown in Fig. 23, an amount of the flux linkage is controlled. The relationship between the rotational speed and the rotational torque thus can be controlled without wastefully using the electric power.

### (Structure of axial gap type electric motor according to yet another embodiment, in the following indicated as: "sixth" embodiment)

Fig. 23 is an illustration, showing a structure of the major part of the axial gap type electric motor according to this embodiment.

This illustration only shows a rotor of the axial gap type electric motor of this sixth embodiment.

As shown in Fig. 23, first, the rotor 124 of this embodiment includes a plurality of magnet members 126 fixedly positioned on an annular section 125 of a rotor yoke of a first rotor section 124-1.

Next, the rotor 120 includes a second rotor section 124-2 constructed in such a manner that magnetic-member-combined type magnets 129 which number is the same as the number of the magnetic members 126 are disposed on a rotary retainer (not shown) to nearly slidably contact with a rotational surface of each magnetic member 126, and the second rotor section 124-2 coaxially engages with the first rotor section 124-1 and rotates together with the first rotor section 124-1.

Each magnetic-member-combined type magnet 129 is formed in such a manner that a magnetic member 127 disposed to oppose to the respective magnetic member 126 and a field magnet 128 disposed to oppose to the stator (not shown) are piled with each other.

A stator that is positioned to oppose to the rotor 124 has the same structure as that of the stator 39 shown in Figs. 3 and 4.

In this axial gap type electric motor of this embodiment, when it makes a low speed high torque rotation, as shown in Fig. 23, the first rotor section 124-1 and the second rotor section 124-2 are positioned in such a manner that the respective magnetic members 126 and the magnetic-member-combined type magnets 129 entirely overlap with each other to rotate in phase.

Thereby, the magnetic fluxes coming from one magnetic pole of each field magnet 128 are gathered and the flow thereof is adjusted by the combined type magnetic member 127 and the magnetic member 126 positioned thereabove and opposing to the combined type magnetic member 127, and then the magnetic fluxes are again gathered and the flow thereof is again adjusted by the annular section 125, the neighboring magnetic member 126 and the magnetic member 127 positioned opposite and below the magnetic member 126. Afterwards, the magnetic fluxes flow through the magnetic member 127 and the combined type field magnet 128.

The magnetic fluxes coming from the other magnetic pole of each field magnet 128 flow into each tooth of the stator opposing to the field magnet 128 positioned therebelow, and flow through the neighboring tooth via the stator side yoke.

That is, the magnetic fluxes of each field magnet 128 flow through the respective combined magnetic member 127 and magnetic member 126, the annular section 125, the neighboring magnetic member 126, the magnetic member 127 opposing to the magnetic member 126, the combined type field magnet 128 combined with the magnetic member 127, the tooth of the stator, the stator side yoke, the neighboring tooth, and the combined type field magnet 128 opposing to this neighboring tooth to reflux through the coil wound around the tooth of the stator.

This condition is the same as the condition of the flow of the magnetic flux flow shown in Fig. 13(a). Thereby, the drive condition during the low speed high torque rotation is made can be realized.

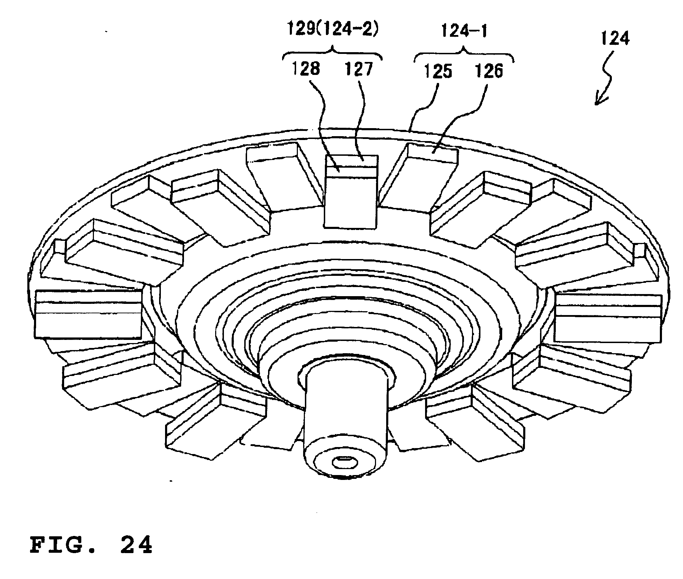

Fig. 24 is an illustration, showing a relationship of displacement of the rotational phase between the first rotor section 124-1 and the second rotor section 124-2 when the rotor 120 makes a high speed low torque rotation in the structure. Fig. 24 shows a condition under which the displacement of the rotational phase between the first rotor section 120-4 and the second rotor section 120-4 is the maximum.

In this embodiment, the first rotor section 124-1 and the second rotor section 124-2 can move relative to each other between the condition under which the phases are consistent with one another as shown in Fig. 23 and the condition under which the phases are displaced within 15 degrees from one another as shown in Fig. 24.

Under the condition that the phases are displaced with 15 degrees as shown in Fig. 24, a magnetic gap between each magnetic member 127 and the respective magnetic member 126 is extremely large. Thus, almost the magnetic flux flow of each magnetic member 127 does not flow into the magnetic member 126, i.e., the magnetic flux flow is under the shut out condition.

This condition is slightly different from the condition shown in Fig. 13(b); however, the condition under which the gap becomes larger at a portion where the magnetic flux flow has been gathered and adjusted before, and the magnetic flux is shut out not to flow through the tooth of the stator side yoke is the same as the condition of Fig. 13(b). Thereby, the drive condition during the high speed low torque rotation is made can be realized.

In other words, by suitably positioning the first rotor section 124-1 and the second rotor section 124-2 to control the displacement of the rotational phase from the state shown in Fig. 23 to the state shown in Fig. 24, an amount of the flux linkage is controlled. The relationship between the rotational speed and the rotational torque thus can be controlled without wastefully using the electric power.

The description above discloses (amongst others) a structure of a rotary electrical machine according to a first aspect which includes: a rotor rotational about an axis of a rotating shaft; and a stator disposed to oppose to the rotor, wherein one of the rotor and the stator is divided into at least two portions along a direction in which direction the rotor and the stator oppose to each other, and one portion of the divided two portions is movable in a rotational direction or a reverse rotational direction of the rotor relative to another one portion in such a manner that a gap to form a magnetic reluctance between the first portion and the second portion is variable.

This rotary electrical machine is constructed, for example, such that the movement of the one portion relative to the another one portion is a reciprocal movement within a predetermined angle.

Also, the rotary electrical machine can be constructed, for example, in such a manner that the one portion and the another one portion are stators, the another one portion is a first stator core having a plurality of first teeth respective one end surfaces of which oppose to the rotor and a winding is wound around a circumferential side surface of each one of the first teeth, and the one portion is a second stator core having a plurality of second teeth respective one end portions of which are positioned to oppose to respective opposite end surfaces that oppositely exist relative to the one end surfaces of the first teeth that oppose to the rotor.

In this connection, the rotary electrical machine is constructed, for example, in such a manner that a rotational angle of the one portion relative to the another one portion is less than an angle of nip that is defined by two neighboring teeth of the second teeth.

Also, the rotary electrical machine can be constructed, for example, in such a manner that the one portion and the another one portion are rotors, the another one portion is a first rotor section having a plurality of first magnetic members respective one end surfaces of which oppose to the stator, and the one portion is a second rotor section having a plurality of second magnetic members respective end portions of which are positioned to oppose to respective other end surfaces of the first magnetic members that oppositely exist relative to the one end surfaces that oppose to the stator.

In this connection, the rotary electrical machine is constructed, for example, in such a manner that a rotational angle of the one portion relative to the another one portion is less than an angle of nip that is defined by two neighboring magnetic members of the second magnetic members.

Next, the rotary electrical machine of a second aspect, which includes a rotor having a annular section that rotates about an axis of a rotating shaft, a first stator core having a plurality of first teeth each of which has a portion one end surface of which is positioned to oppose to the annular section and a winding is wound around a side circumferential surface of the portion except for both end surfaces, and a second stator core having a plurality of second teeth respective one end portions of which are positioned to oppose to respective other end surfaces of the first teeth of the first stator core that oppositely exist relative to the one end surfaces that oppose to the rotor, and is constructed such that the second stator core is movable in a rotational direction or a reverse rotational direction of the rotor.

The second stator core is constructed, for example, to be movable in the rotational direction or the reverse rotational direction of the rotor and also movable in an axial direction of the rotor.

Also, each one of the first teeth is constructed, for example, to have has a projection abutting on a side surface of each one of the second teeth at one of the end surfaces that opposes to the one end portion of each one of the second teeth.

This rotary electrical machine is constructed, for example, in such a manner that a lower portion of each one of the first teeth opposing to the annular section of the rotor is divided into a portion which has a winding on a circumferential surface thereof and another one portion which has no winding on a circumferential surface thereof, and the second teeth include teeth corresponding to the portion of the first teeth that has the winding on the circumferential surface thereof and other teeth corresponding to the another one portion of the first teeth that has no winding on the circumferential surface thereof.

Also, respective opposing surfaces of the rotor and the first teeth can be formed to obliquely extend in such a manner that an inner side of the opposing surface of the rotor that is positioned closer to the axis of a rotating shaft is thick and an outer side is thin.

The rotary electrical machine of a third aspect, which includes a cylindrical rotor rotational about an axis of a rotating shaft, a first stator core having a plurality of first teeth one end surfaces of which are positioned inside of the cylindrical configuration of the cylindrical rotor to oppose to the rotor and a winding is wound around a circumferential side surface of each one of the first teeth except for both end surfaces, and a second stator core having a plurality of second teeth respective one end portions of which are positioned to oppose to respective other end surfaces of the first teeth of the first stator core that oppositely exist relative to the one end surfaces that oppose to the rotor, and is constructed such that the second stator core is movable in a rotational direction or a reverse rotational direction of the rotor.

Further, the rotary electrical machine of a fourth aspect, which includes a columnar of cylindrical rotor rotational about an axis of a rotating shaft, a first stator core having a plurality of first teeth one end surfaces of which are positioned outside in a radial direction of the rotor to oppose to the rotor and a winding is wound around a circumferential side surface of each one of the first teeth except for both end surfaces, and a second stator core having a plurality of second teeth respective one end portions of which are positioned to oppose to respective other end surfaces of the first teeth of the first stator core that oppositely exist relative to the one end surfaces that oppose to the rotor, and respective other end portions are retained by a retainer, and is constructed such that the second stator core is movable in a rotational direction or a reverse rotational direction of the rotor.

The rotary electrical machine of the second, third or fourth aspect is constructed, for example, in such a manner that, when the second teeth are positioned to entirely face the first teeth, a magnetic reluctance existing between one of the first teeth and one of the second teeth that entirely faces the one of the first teeth is smaller than a magnetic reluctance existing between the one of the first teeth and another one of the first teeth neighboring the one of the first teeth, and, when the second teeth moves so that the one of the second teeth is placed at a right middle position between the one of the first teeth and the another one of the first teeth, a magnetic reluctance passing through the one of the second teeth to exist between the one of the first teeth and the another one of the first teeth neighboring to the one of the first teeth is larger than a magnetic reluctance existing between the one of the first teeth and another one of the first teeth neighboring the one of the first teeth.

In this connection, the rotary electrical machine is constructed, for example, in such a manner that the magnetic reluctances are adjustable by a distance between the one of the first teeth and another one of the first teeth neighboring the one of the first teeth, or a distance between the one of the first teeth and the one of the second teeth.

Also, the rotary electrical machine of the second, third or fourth aspect is constructed, for example, to include a movement drive force transmitting mechanism for moving the second stator core in the rotational direction or the reverse rotational direction of the rotor. The rotary electrical machine of the second, third or fourth aspect is constructed, for example, such that the movement of the second stator core relative to the first stator core is a reciprocal movement within a predetermined angle in the rotational direction or the reverse rotational direction of the rotor. The rotary electrical machine of the second, third or fourth aspect is constructed, for example, such that the movement of the second stator core relative to the first stator core is an intermittently rotational movement in the rotational direction of the rotor. The rotary electrical machine of the second, third or fourth aspect is constructed, for example, such that the plurality of the first teeth and the winding are unitarily molded together. The rotary electrical machine of the second, third or fourth aspect is constructed, for example, such that the plurality of the second teeth and the winding are unitarily molded together.

According to the above first to fourth aspects, a robust and small rotary electrical machine can be provided which has a mechanism capable of varying output characteristic, without enlargement of the whole configuration, without increase of mechanical loss, without any transmission, or without consumption of electric power that does not contribute to increasing torque.

Thus, according to a preferred aspect, in order to provide a robust and small rotary electrical machine having a mechanism capable of varying an output characteristic, without increasing mechanical loss, or without wastefully consuming the electric power that does not contribute to increasing torque, there is provided a rotor 71 has N pole and S pole magnets alternately and fixedly disposed. An end surface 81 a, which opposes to the rotor 71, of each one of a plurality of first teeth 81 positioned on a first stator section 83 is broader than that of the opposite surface 81b, and a winding 82, which is not shown, is wound around a portion between both of the end surfaces 81 a, 81 b. A second stator section 87 has second teeth 84 which number is the same as the number of the first teeth 81 and which has no winding. The second teeth 84 are disposed to oppose to the end surfaces 81 b of the respective first teeth 81, and each second tooth 84 is reciprocally movable between a reference position at which the second tooth right opposes to the respective first tooth 81b and a maximum movable position located at the right center between the respective end surfaces 81 b. At the reference position, a strong magnetic flux flow 98 flows into the entire first tooth 81 from each magnet 79. At the maximum movable position, a weak magnetic flux flow 99 only flows over the end surface 81a of each first tooth 81. A middle amount of the magnetic flux flow occurs at a middle moved position.

Further, the description above discloses a rotary electrical machine according to a fifth aspect, which comprises: a ring-shaped first stator having a plurality of first teeth disposed with their one end surfaces opposed to a disk-shaped rotor rotatable about a rotating shaft and provided with windings wound around their circumferential side surfaces except for both end surfaces; and a second stator provided with a plurality of second teeth having one ends opposed to the end surfaces of the first teeth of the first stator opposite the end surfaces thereof opposed to the rotor and the other ends fixedly fitted in a plurality of tooth receiving openings formed through a ring-shaped base, wherein the second stator is movable in the rotating direction of the rotor with respect to the first stator.

The description further discloses a rotary electrical machine according to a sixth aspect, which comprises: a cylindrical first stator having a plurality of first teeth disposed inside the cylindrical bore of a cylindrical rotor rotatable about a rotating shaft with their one end surfaces opposed to the rotor and provided with windings wound around their circumferential side surfaces except for both end surfaces; and a second stator provided with a plurality of second teeth having one ends opposed to the end surfaces of the first teeth of the first stator opposite the end surfaces thereof opposed to the rotor and the other ends fixedly inserted in a plurality of tooth receiving openings formed through a cylindrical base, wherein the second stator is movable in the rotating direction of the rotor with respect to the first stator.

The description still further discloses a rotary electrical machine according to a seventh aspect, which comprises: a cylindrical first stator having a plurality of first teeth disposed radially outside a columnar rotor rotatable about a rotating shaft with their one end surfaces opposed to the rotor and provided with windings wound around their circumferential side surfaces except for both end surfaces; and a second stator provided with a plurality of second teeth having one ends opposed to the end surfaces of the first teeth of the first stator opposite the end surfaces thereof opposed to the rotor and the other ends fixedly inserted in a plurality of tooth receiving openings formed through a cylindrical base, wherein the second stator is movable in the rotating direction of the rotor with respect to the first stator.

In the rotary electrical machine according to the fifth to seventh aspects, the second teeth are provided in the same number as the first teeth.

Also, the end surfaces of the first teeth opposed to the rotor are larger in size than the end surfaces on the opposite side thereof.

In addition, when the second teeth are opposed to the first teeth, the magnetic resistance between a first tooth and a second tooth opposed thereto is smaller than the magnetic resistance between the first tooth and its adjacent first tooth, and, when the second teeth have been moved to the middle between the first teeth, the magnetic resistance between a first tooth and its adjacent first tooth through a second tooth is greater than the magnetic resistance between the first tooth and its adjacent first tooth.

In this case, the magnetic resistances can be preferably controlled by the distance between the first teeth and their adjacent first teeth or the distance between the first teeth and the second teeth.

The rotary electrical machine according to the fifth to seventh aspects further comprises a movement driving force transmission mechanism for moving the second stator in the rotating direction of the rotor with respect to the first stator.

The movement of the second stator with respect to the first stator may be reciprocating movement through a specific angle in the rotating direction of the stator or intermittent movement in the rotating direction of the stator.

Preferably, the plurality of first teeth and the windings are integrally molded.

Preferably, the plurality of second teeth and the base are integrally molded.

According to the fifth to seventh aspects, the magnetic fluxes flowing from the field magnets of the rotor through the first teeth can be easily increased or decreased by moving the second stator opposed to the side of the first stator opposite the side thereof opposed to the rotor in the rotating direction of the rotor with respect to the first stator. Thus, there can be provided a durable and small rotary electrical machine provided with a mechanism for varying the output characteristics thereof without a speed changer which does not increase the size of the entire rotary electrical machine and does not increase mechanical loss.

Thus, according to a preferred aspect, in order to provide a durable and small rotary electrical machine provided with a mechanism for changing the output characteristic without increasing mechanical loss and consuming electricity which does not contribute to torque, N-pole and S-pole magnets 79 are alternately arranged and fixed to a rotor 71. Each of a plurality of first teeth 81 provided on a first stator 83 has an end surface 81 which is wider than an end surface 81 b on the opposite side and provided with a winding 82 (not shown) wound between the end surfaces 81a and 81b. A second stator 87 has a second teeth 84 without a winding in the same number as the first teeth 81. The second teeth 84 are disposed in opposition to the end surfaces 81 b of the first teeth 81, and reciprocable between a reference position where they are opposed to the end surfaces 81 b and a maximum moving position where they are located in the middle between the end surfaces 81b. When the second teeth 84 are in the reference position, strong magnetic flux flow 98 flow from the magnets 79 through the first teeth 81. When the second teeth 84 are in the maximum moving position, weak magnetic fluxes flow from the magnets 79 through only the end surfaces 81a of the first teeth 81. When the second teeth 84 are in an intermediate position, intermediate magnetic fluxes are generated.

The description above further discloses a rotary electrical machine comprising a rotor, being rotatable about an axis of a rotating shaft, and a stator, opposing the rotor, wherein one of the rotor and the stator is divided into at least first and second parts along a direction in which the rotor and stator oppose to each other, and wherein one of said first and second parts is rotatable relative to the respective other one of these first and second parts.

Preferably, by relative rotation of said first or second parts about the axis of the rotating shaft, a gap to form a magnetic reluctance between the first and second parts is variable.

Further, preferably, the movement of the one part relative to the another one part is a reciprocal movement within a predetermined angle in a rotational direction or reverse rotational direction of the rotor.

Still further, preferably, the one part and the another one part are stators, the another one part is a first stator core having a plurality of first teeth respective one end surfaces of which oppose to the rotor and a winding is wound around a circumferential side surface of each one of the first teeth, and the one part is a second stator core having a plurality of second teeth respective one end portions of which are positioned to oppose to respective opposite end surfaces that oppositely exist relative to the one end surfaces of the first teeth that oppose to the rotor.

Still further, preferably, a rotational angle of the one part relative to the another one part is less than an angle of nip that is defined by two neighboring teeth of the second teeth.

Still further, preferably, the rotor comprises an annular section rotational about the axis of the rotating shaft; the first stator core comprises the plurality of first teeth each of which has a portion one end surface of which is positioned to oppose to the annular section and the winding is wound around the circumferential side surface of the portion except for both end surfaces; and the second stator core comprises the plurality of second teeth respective one end portions of which are positioned to oppose to respective other end surfaces of the first teeth of the first stator core that oppositely exist relative to the one end surfaces that oppose to the rotor, wherein the second stator core is movable in a rotational direction or a reverse rotational direction of the rotor.

Still further, preferably, the second stator core is movable in the rotational direction or the reverse rotational direction of the rotor and also movable in an axial direction of the rotor.

Still further, preferably, each one of the first teeth has a protruding portion abutting on a side surface of each one of the second teeth at one of the end surfaces that opposes to the one end portion of each one of the second teeth.

Still further, preferably, a lower portion of each one of the first teeth opposing to the annular section of the rotor is divided into a portion which has a winding on a circumferential surface thereof and another one portion which has no winding on a circumferential surface thereof, and the second teeth include teeth corresponding to the portion of the first teeth that has the winding on the circumferential surface thereof and other teeth corresponding to the another one portion of the first teeth that has no winding on the circumferential surface thereof.

Still further, preferably, respective opposing surfaces of the rotor and the first teeth are formed to obliquely extend in such a manner that an inner side of the opposing surface of the rotor that is positioned closer to the axis of a rotating shaft is thick and an outer side is thin.

The description still further discloses that the rotary electrical machine may further comprise a cylindrical rotor rotational about the axis of the rotating shaft, the first stator core having the plurality of first teeth one end surfaces of which are positioned inside of the cylindrical configuration of the cylindrical rotor to oppose to the rotor and the winding is wound around a circumferential side surface of each one of the first teeth except for both end surfaces, and the second stator core having a plurality of second teeth respective one end portions of which are positioned to oppose to respective other end surfaces of the first teeth of the first stator core that oppositely exist relative to the one end surfaces that oppose to the rotor, wherein the second stator core is movable in a rotational direction or a reverse rotational direction of the rotor.

The description still further discloses that the rotary electrical machine may further comprise a columnar of cylindrical rotor rotational about the axis of a rotating shaft, the first stator core having the plurality of first teeth one end surfaces of which are positioned outside in a radial direction of the rotor to oppose to the rotor and the winding is wound around a circumferential side surface of each one of the first teeth except for both end surfaces, and the second stator core having the plurality of second teeth respective one end portions of which are positioned to oppose to respective other end surfaces of the first teeth of the first stator core that oppositely exist relative to the one end surfaces that oppose to the rotor, and respective other end portions are retained by a retainer, wherein the second stator core is movable in a rotational direction or a reverse rotational direction of the rotor.

Still further, preferably, when the second teeth are positioned to entirely face the first teeth, a magnetic reluctance existing between one of the first teeth and one of the second teeth that entirely faces the one of the first teeth is smaller than a magnetic reluctance exiting between the one of the first teeth and another one of the first teeth neighboring the one of the first teeth, and, when the second teeth moves so that the one of the second teeth is placed at a right middle position between the one of the first teeth and the another one of the first teeth, a magnetic reluctance passing through the one of the second teeth to exist between the one of the first teeth and the another one of the first teeth neighboring to the one of the first teeth is larger than a magnetic reluctance existing between the one of the first teeth and another one of the first teeth neighboring the one of the first teeth.

Still further, preferably, the magnetic reluctances are adjustable by a distance between the one of the first teeth and another one of the first teeth neighboring the one of the first teeth, or a distance between the one of the first teeth and the one of the second teeth.

Still further, preferably, the rotary electrical machine may further comprise a movement drive force transmitting mechanism for moving the second stator core in the rotational direction or the reverse rotational direction of the rotor.

Still further, preferably, the movement of the second stator core relative to the first stator core is a reciprocal movement within a predetermined angle in the rotational direction or the reverse rotational direction of the rotor, or wherein the movement of the second stator core relative to the first stator core is an intermittently rotational movement in the rotational direction of the rotor.

Still further, preferably, the plurality of the first teeth and the winding are unitarily molded together, and/or wherein the plurality of the second teeth and the winding are unitarily molded together.

Still further, preferably, the second teeth are provided in the same number as the first teeth.

Still further, preferably, the end surfaces of the first teeth opposed to the rotor are larger in size than the end surfaces on the opposite side thereof.

The description still further discloses a rotary electrical machine, in which one part and the another one part are rotors, the another one part is a first rotor section having a plurality of first magnetic members respective one end surfaces of which oppose to the stator, and the one part is a second rotor section having a plurality of second magnetic members respective end portions of which are positioned to oppose to respective other end surfaces of the first magnetic members that oppositely exist relative to the one end surfaces that oppose to the stator.

Preferably, a rotational angle of the one part relative to the another one part is less than an angle of nip that is defined by two neighboring magnetic members of the second magnetic members.

## Claims

1. Rotary electrical machine comprising a rotor, being rotatable about an axis of a rotating shaft, and a stator, opposing the rotor,
wherein the stator is divided into at least first and second stator cores along a direction in which the rotor and stator oppose to each other, said first stator core having a plurality of first teeth, respective one end surfaces of which oppose to the rotor, and a winding wound around a circumferential side surface of each one of the first teeth, and said second stator core having a plurality of second teeth, respective one end portions of which are positioned to oppose to respective opposite end surfaces that oppositely exist relative to the one end surfaces of the first teeth that oppose to the rotor,
wherein one of said first and second stator cores is rotatable relative to the respective other one of these first and second stator cores,
wherein, by relative rotation of said first or second stator cores about the axis of the rotating shaft, a gap to form a magnetic reluctance between the first and second stator cores is variable, and wherein each one of the first teeth has a protruding portion abutting on a side surface of each one of the second teeth at one of the end surfaces that opposes to the one end portion of each one of the second teeth.

2. Rotary electrical machine according to claim 1, wherein the movement of the stator core relative to the another stator core is a reciprocal movement within a predetermined angle in a rotational direction or reverse rotational direction of the rotor.

3. Rotary electrical machine according to claim 2, wherein a rotational angle of the one stator core relative to the another stator core is less than an angle of nip that is defined by two neighboring teeth of the second teeth.

4. Rotary electrical machine according to claim 1 or 2, wherein the rotor comprises an annular section rotational about the axis of the rotating shaft; the first stator core comprises the plurality of first teeth each of which has a portion one end surface of which is positioned to oppose to the annular section and the winding is wound around the circumferential side surface of the portion except for both end surfaces; and the second stator core comprises the plurality of second teeth respective one end portions of which are positioned to oppose to respective other end surfaces of the first teeth of the first stator core that oppositely exist relative to the one end surfaces that oppose to the rotor, wherein the second stator core is movable in a rotational direction or a reverse rotational direction of the rotor.

5. Rotary electrical machine according to one of the claims 1 to 4, wherein the second stator core is movable in the rotational direction or the reverse rotational direction of the rotor and also movable in an axial direction of the rotor.

6. Rotary electrical machine according to one of the claims 1 to 5, wherein a lower portion of each one of the first teeth opposing to the annular section of the rotor is divided into a portion which has a winding on a circumferential surface thereof and another one portion which has no winding on a circumferential surface thereof, and the second teeth include teeth corresponding to the portion of the first teeth that has the winding on the circumferential surface thereof and other teeth corresponding to the another one portion of the first teeth that has no winding on the circumferential surface thereof.

7. Rotary electrical machine according to one of the claims 1 to 6, wherein respective opposing surfaces of the rotor and the first teeth are formed to obliquely extend in such a manner that an inner side of the opposing surface of the rotor that is positioned closer to the axis of a rotating shaft is thick and an outer side is thin.

8. Rotary electrical machine according to one of the claims 1 to 3, further comprising a cylindrical rotor rotational about the axis of the rotating shaft, the first stator core having the plurality of first teeth one end surfaces of which are positioned inside of the cylindrical configuration of the cylindrical rotor to oppose to the rotor and the winding is wound around a circumferential side surface of each one of the first teeth except for both end surfaces, and the second stator core having a plurality of second teeth respective one end portions of which are positioned to oppose to respective other end surfaces of the first teeth of the first stator core that oppositely exist relative to the one end surfaces that oppose to the rotor, wherein the second stator core is movable in a rotational direction or a reverse rotational direction of the rotor.

9. Rotary electrical machine according to one of the claims 1 to 3, further comprising a columnar of cylindrical rotor rotational about the axis of a rotating shaft, the first stator core having the plurality of first teeth one end surfaces of which are positioned outside in a radial direction of the rotor to oppose to the rotor and the winding is wound around a circumferential side surface of each one of the first teeth except for both end surfaces, and the second stator core having the plurality of second teeth respective one end portions of which are positioned to oppose to respective other end surfaces of the first teeth of the first stator core that oppositely exist relative to the one end surfaces that oppose to the rotor, and respective other end portions are retained by a retainer, wherein the second stator core is movable in a rotational direction or a reverse rotational direction of the rotor.

10. Rotary electrical machine according to one of the claims 1 to 9, wherein, when the second teeth are positioned to entirely face the first teeth, a magnetic reluctance existing between one of the first teeth and one of the second teeth that entirely faces the one of the first teeth is smaller than a magnetic reluctance existing between the one of the first teeth and another one of the first teeth neighboring the one of the first teeth, and, when the second teeth moves so that the one of the second teeth is placed at a right middle position between the one of the first teeth and the another one of the first teeth, a magnetic reluctance passing through the one of the second teeth to exist between the one of the first teeth and the another one of the first teeth neighboring to the one of the first teeth is larger than a magnetic reluctance existing between the one of the first teeth and another one of the first teeth neighboring the one of the first teeth.

11. Rotary electrical machine according to claim 10, wherein the magnetic reluctances are adjustable by a distance between the one of the first teeth and another one of the first teeth neighboring the one of the first teeth, or a distance between the one of the first teeth and the one of the second teeth.

12. Rotary electrical machine according to one of the claims 1 to 11, further comprising a movement drive force transmitting mechanism for moving the second stator core in the rotational direction or the reverse rotational direction of the rotor.

13. Rotary electrical machine according to one of the claims 1 to 12, wherein the movement of the second stator core relative to the first stator core is a reciprocal movement within a predetermined angle in the rotational direction or the reverse rotational direction of the rotor, or wherein the movement of the second stator core relative to the first stator core is an intermittently rotational movement in the rotational direction of the rotor.

14. Rotary electrical machine according to one of the claims 1 to 13, wherein the plurality of the first teeth and the winding are unitarily molded together, and/or
wherein the plurality of the second teeth and the winding are unitarily molded together.

15. Rotary electrical machine according to one of the claims 1 to 14, wherein the second teeth are provided in the same number as the first teeth.

16. Rotary electrical machine according to one of the claims 1 to 15, wherein the end surfaces of the first teeth opposed to the rotor are larger in size than the end surfaces on the opposite side thereof.
